(19) Europäisches Patentamt
European Patent Office
Office européen des brevets

(11) **EP 2 538 345 A1**

(12) **EUROPEAN PATENT APPLICATION**
published in accordance with Art. 153(4) EPC

(43) Date of publication:
**26.12.2012 Bulletin 2012/52**

(51) Int Cl.:
***G06F 17/14*** (2006.01)

(21) Application number: **11744578.3**

(86) International application number:
**PCT/JP2011/052844**

(22) Date of filing: **10.02.2011**

(87) International publication number:
**WO 2011/102291 (25.08.2011 Gazette 2011/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.02.2010 JP 2010030796**

(71) Applicants:
• **NEC Corporation
Tokyo 108-8001 (JP)**

• **NTT DoCoMo, Inc.
Tokyo 100-6150 (JP)**

(72) Inventor: **HASHIMOTO, Takeshi
Tokyo 108-8001 (JP)**

(74) Representative: **Vossius & Partner
Siebertstrasse 4
81675 München (DE)**

(54) **FAST FOURIER TRANSFORM CIRCUIT**

(57) Disclosed is a fast Fourier transform circuit capable of high-speed reading and writing of data processed in the individual stages of a fast Fourier transform calculation without segmenting memory. The circuit is provided with: a calculation unit (1) which performs the fast Fourier calculations with digital Fourier transforms as structural elements; memory (2A, 2B) for storing the input/output data of the calculation unit (1); and a means (7) for controlling the writing of calculation results from the calculation unit (1) to the memory (2A, 2B) such that the order of reading data from the memory (2A, 2B) is the same at each stage in the multi-stage calculation performed on the data being processed by the calculation unit (11).

Fig.1

**Description**

{Technical Field}

The present invention relates to a fast Fourier transform circuit for executing Fourier transform at high speed.

{Background Art}

In a fast Fourier transform on the basis of the Cooley-Tukey algorithm (hereinafter, simply called a fast Fourier transform), generally a computation is executed by means of using a 2-pont DFT (Discrete Fourier Transform) as a component (refer to PTL1 to PTL3). In the meantime, for still faster processing, a computation can be executed by using a 4-point DFT as a component (a fast Fourier transform applying radix-4). In this regard, for a fast Fourier transform applying radix-2, the number of data "N" needs to be an exponent of 2; and meanwhile for a fast Fourier transform applying radix-4, the number of data "N" needs to be an exponent of 4.

In order to make processing faster, a combination of a 2-pont DFT and a 4-point DFT can be used for processing in the case of the number of data "N" being a power of 2.

{Citation List}

{Patent Literature}

   PTL1: JP2006-155487A
   PTL2: JP2007-148623A
   PTL3: JP2004-516551A

{Summary of Invention}

{Technical Problem}

In the case where complex data stored in a memory is processed in a fast Fourier transform, it is necessary in a fast Fourier transform applying radix-4 that, for one 4-point DFT, four pieces of complex data are read out of the memory, and then four pieces of complex data output as a result of a computation are written in the memory.

In a commonly-used fast Fourier transform, address intervals of reading and writing in relation to the memory change in the computation of each stage, and therefore it is impossible to read and write four pieces of data at the same time. Accordingly, as the number of cycles needed for executing one 4-point DFT, four cycles are needed if a single port memory is used.

Even in the case of a single port memory, the memory may be segmented into four portions in order to enable reading and writing four pieces of data at the same time. However, at the time of making an LSI in that case, greater the number of segments is, wider a required area becomes because of a test circuit to be added to a memory macro, and furthermore, greater a degree of difficulty in arrangement work becomes. As a result, the rate of mounting does not become increased, and that leads to a wider area of the memory chip.

It is an object of the present invention to give a solution for such inconvenience, and to provide a fast Fourier transform circuit that enables high-speed reading and writing of data to be processed in a computation of each stage of a fast Fourier transform, without segmenting a memory.

{Solution to Problem}

A fast Fourier transform circuit according to the present invention includes: a computation unit for executing fast Fourier computations with a plurality of Discrete Fourier Transformations as components; memories for storing input/ output data of the computation unit; and control means for controlling writing a computation result produced by the computation unit in the memories in such a way that sequential order of reading data from the memories becomes the same for each stage with respect to computations for a plurality of stages, which the computation unit executes for target data.

{Advantageous Effect of Invention}

According to the present invention, data to be processed in a computation of each stage of a fast Fourier transform can be read out and written in at high speed, without segmenting a memory, so that high-speed processing can be implemented while controlling an increase of an area of an LSI.

{Brief Description of the Drawings}

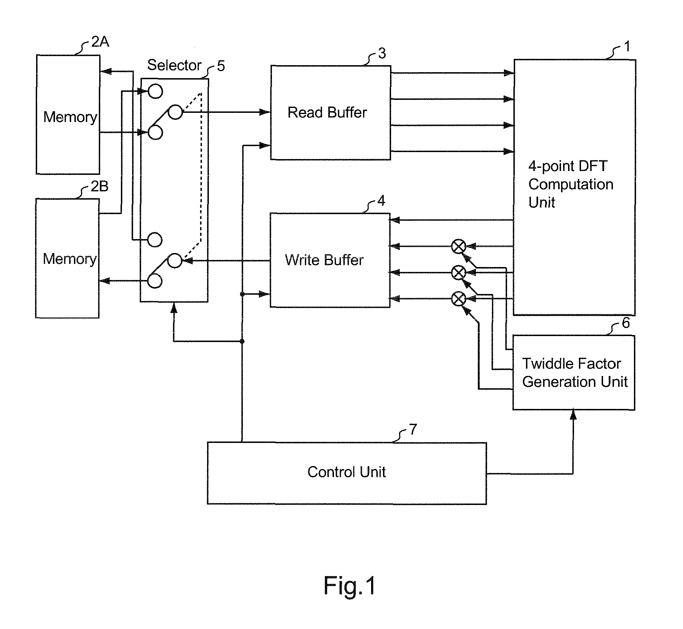

FIG. 1 is a block diagram showing a fast Fourier transform circuit according to a first embodiment of the present invention.

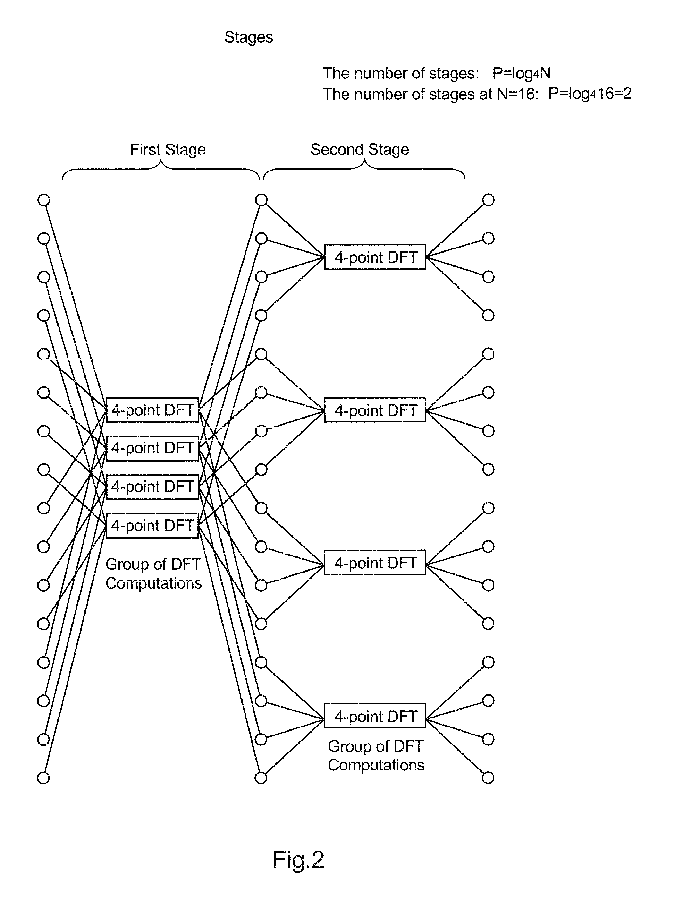

FIG. 2 is a signal flow diagram for explaining operations of a 4-point DFT computation unit in the fast Fourier transform circuit shown in FIG. 1.

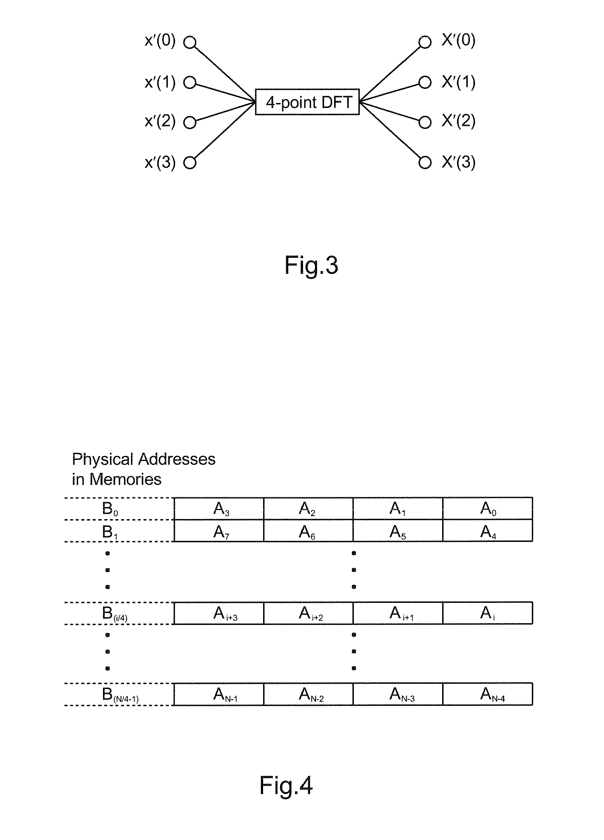

FIG. 3 is a drawing for explaining a configuration of a 4-point DFT in a fast Fourier transform applying radix-4.

FIG. 4 is a drawing for explaining an example of storing complex data in a memory.

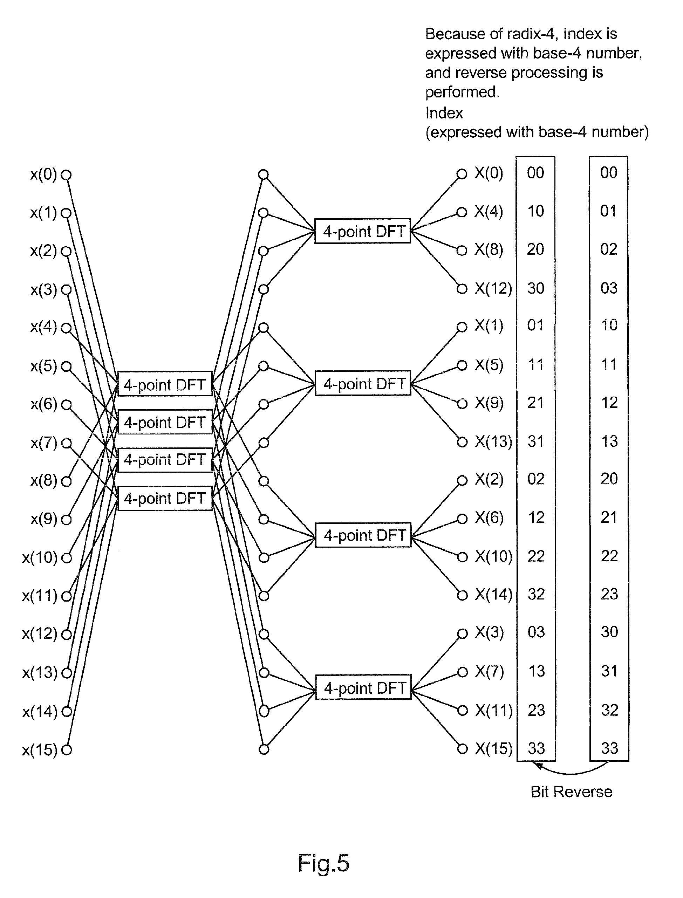

FIG. 5 is a drawing for explaining a conventional method of calculating addresses for writing in a memory.

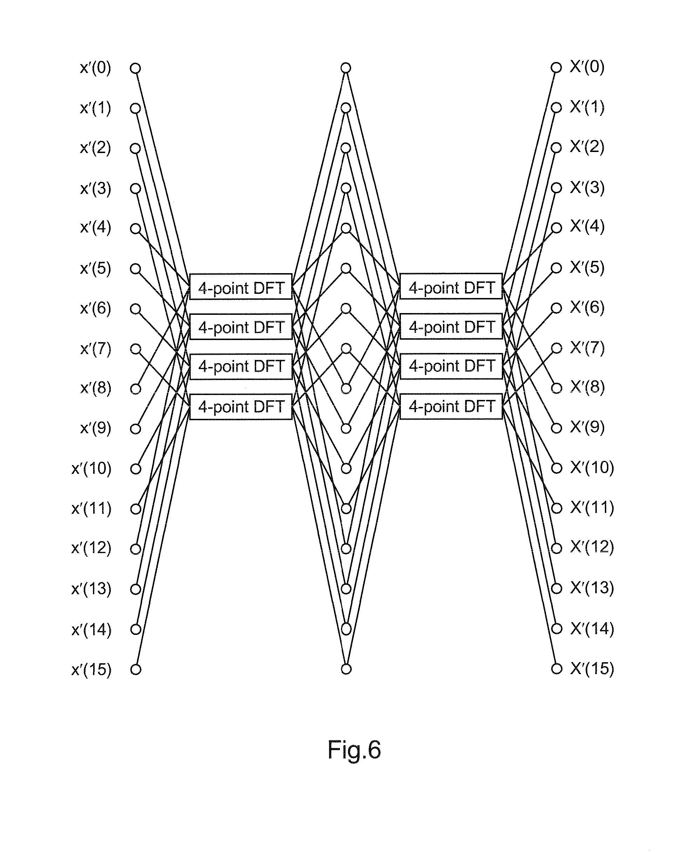

FIG. 6 is a drawing for explaining a method of calculating addresses for writing in a memory of the fast Fourier transform circuit shown in FIG. 1.

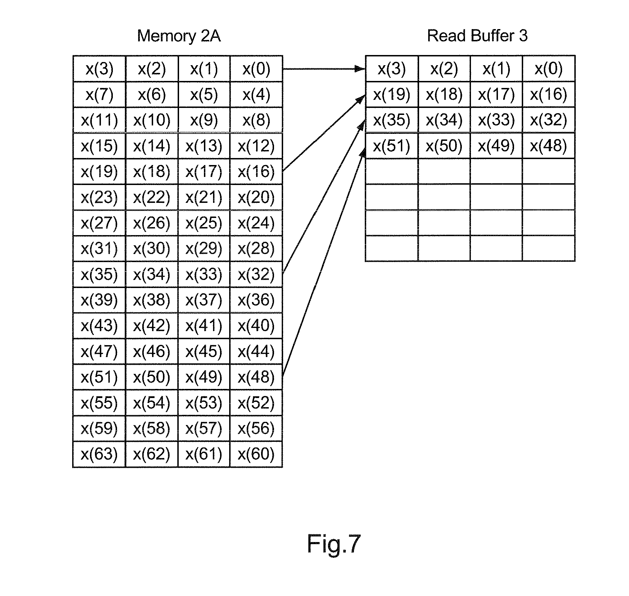

FIG. 7 is a drawing for explaining a workflow of data processing by the fast Fourier transform circuit shown in FIG. 1, wherein the drawing shows a workflow of reading data out of a memory as a reading object, and storing it in a read buffer.

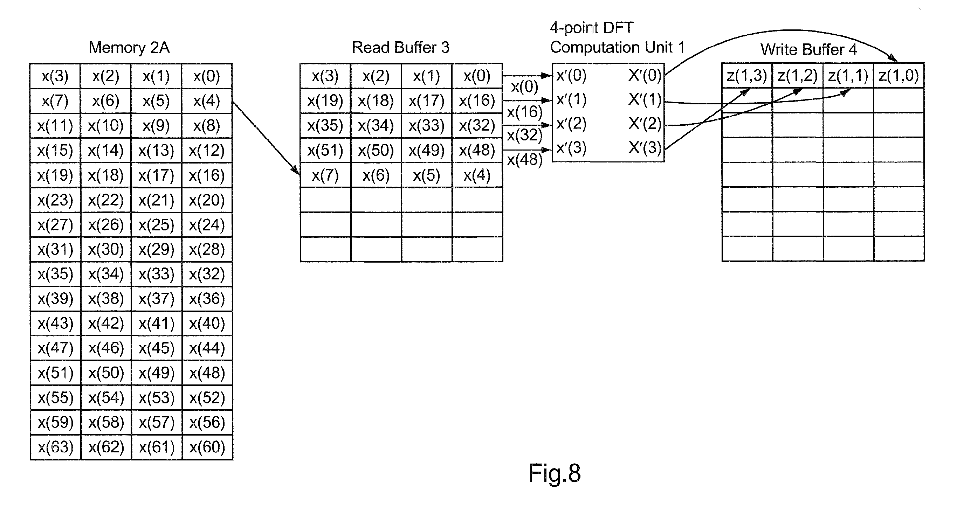

FIG. 8 is a drawing for explaining a workflow of data processing by the fast Fourier transform circuit shown in FIG. 1, wherein the drawing shows a workflow of reading data out of the memory, storing it in the read buffer, a computation by the 4-point DFT computation unit, and storing a computation result in a write buffer.

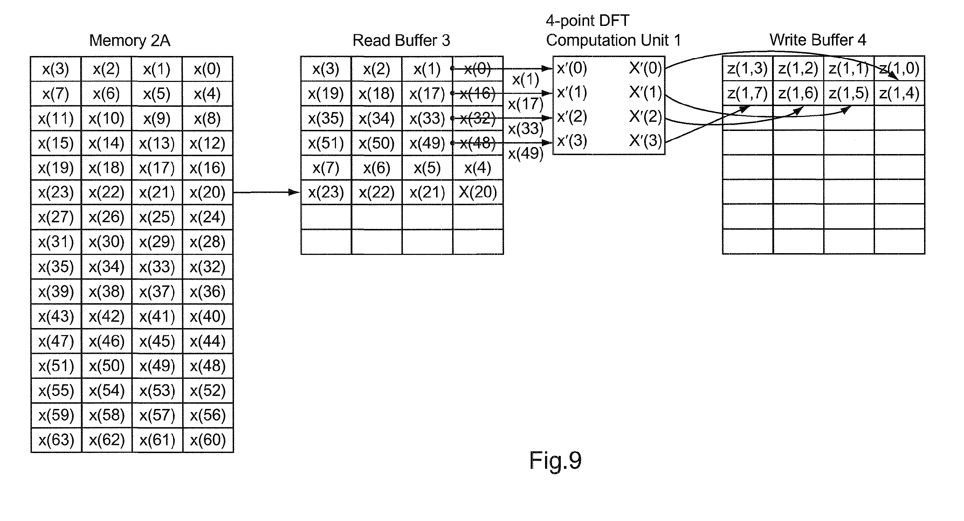

FIG. 9 is a drawing for explaining a workflow of data processing by the fast Fourier transform circuit shown in FIG. 1, wherein the drawing shows a workflow of reading data out of the memory, storing it in the read buffer, a computation by the 4-point DFT computation unit, and storing a computation result in the write buffer.

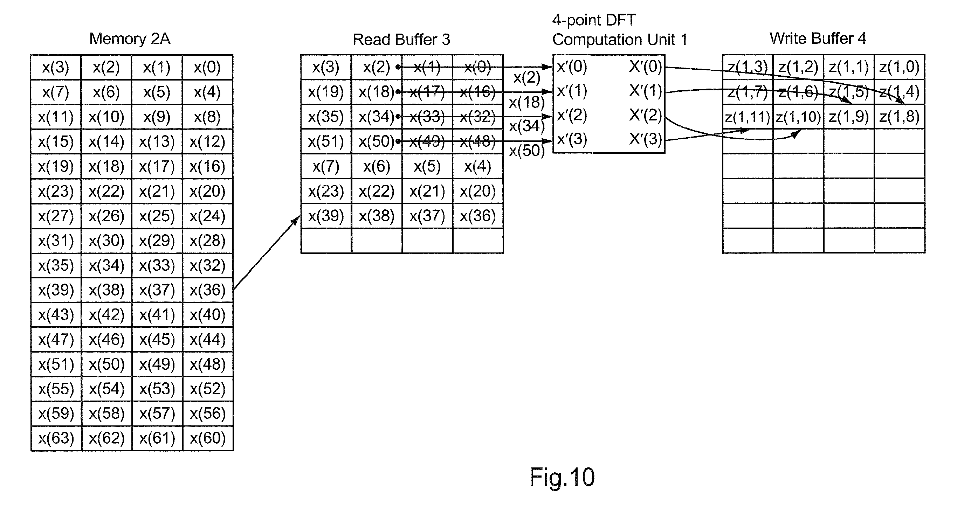

FIG. 10 is a drawing for explaining a workflow of data processing by the fast Fourier transform circuit shown in FIG. 1, wherein the drawing shows a workflow of reading data out of the memory, storing it in the read buffer, a computation by the 4-point DFT computation unit, and storing a computation result in the write buffer.

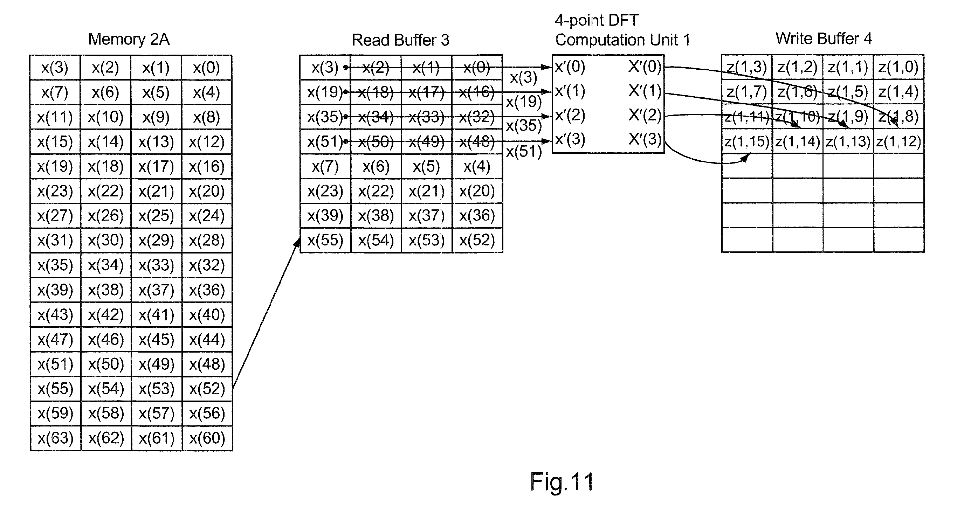

FIG. 11 is a drawing for explaining a workflow of data processing by the fast Fourier transform circuit shown in FIG. 1, wherein the drawing shows a workflow of reading data out of the memory, storing it in the read buffer, a computation by the 4-point DFT computation unit, and storing a computation result in the write buffer.

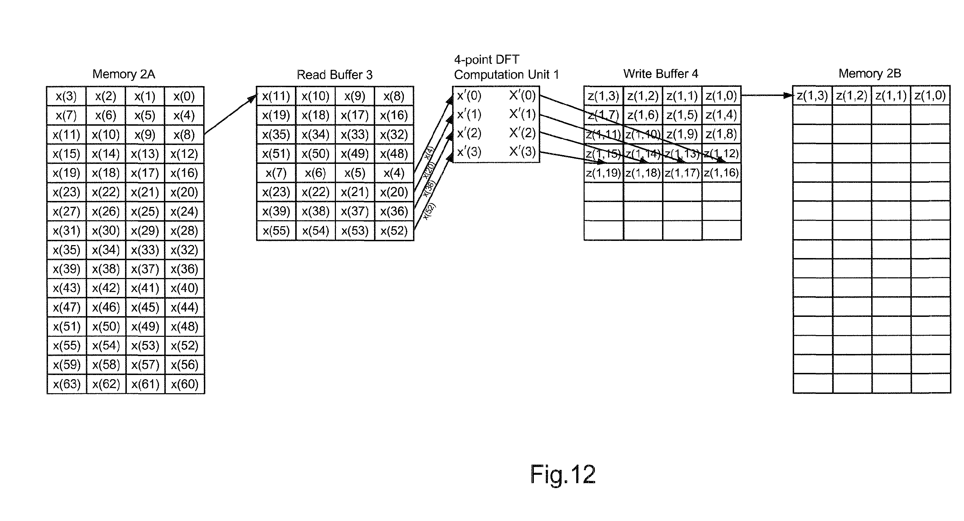

FIG. 12 is a drawing for explaining a workflow of data processing by the fast Fourier transform circuit shown in FIG. 1, wherein the drawing shows a workflow of reading data out of the memory, storing it in the read buffer, a computation by the 4-point DFT computation unit, storing a computation result in the write buffer, and writing data coming from the write buffer in a memory.

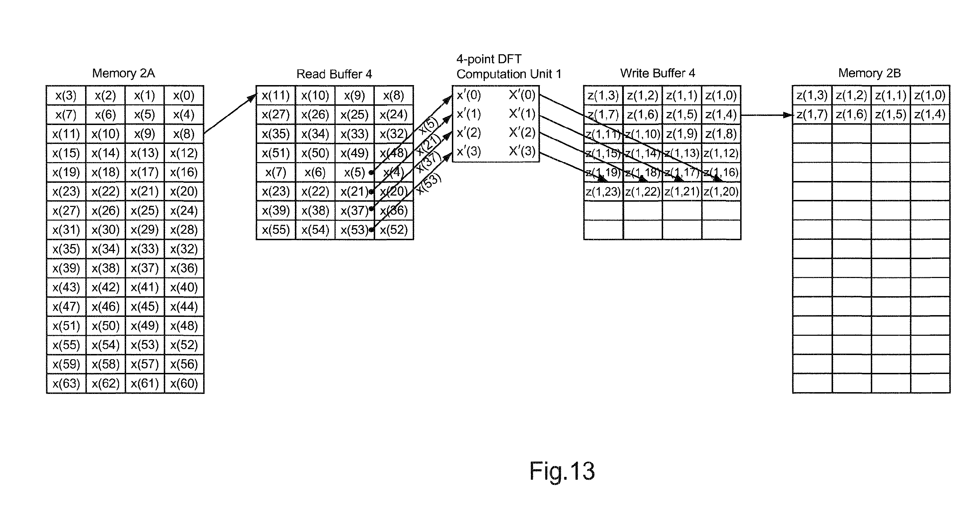

FIG. 13 is a drawing for explaining a workflow of data processing by the fast Fourier transform circuit shown in FIG. 1, wherein the drawing shows a workflow of reading data out of the memory, storing it in the read buffer, a computation by the 4-point DFT computation unit, storing a computation result in the write buffer, and writing data coming from the write buffer in the memory.

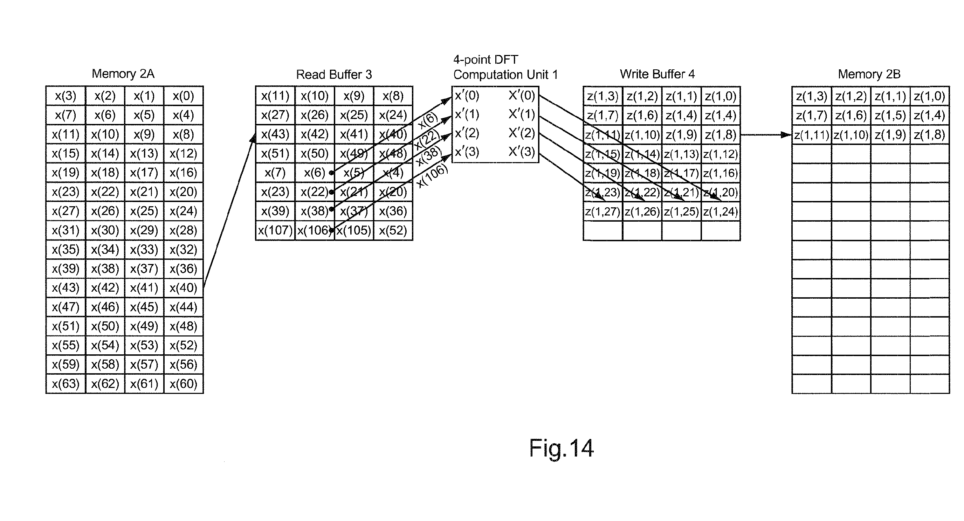

FIG. 14 is a drawing for explaining a workflow of data processing by the fast Fourier transform circuit shown in FIG. 1, wherein the drawing shows a workflow of reading data out of the memory, storing it in the read buffer, a computation by the 4-point DFT computation unit, storing a computation result in the write buffer, and writing data coming from the write buffer in the memory.

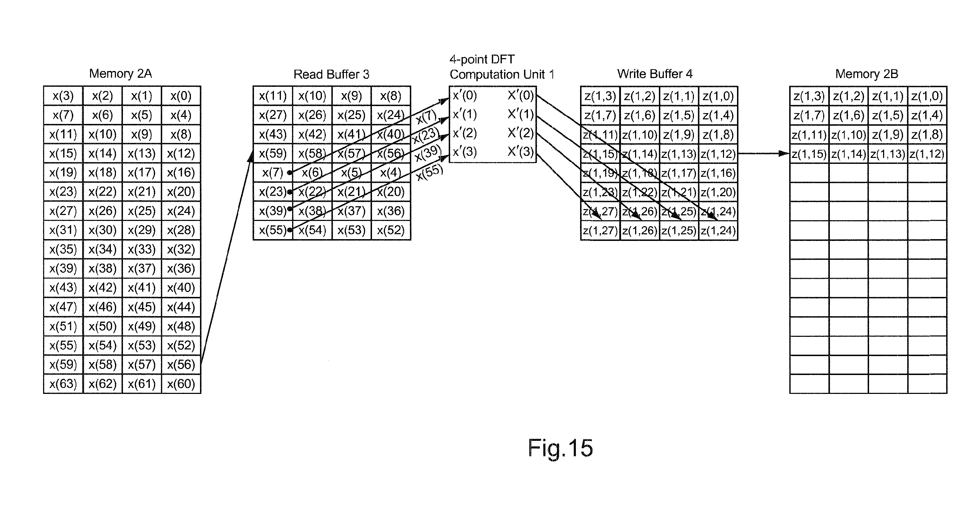

FIG. 15 is a drawing for explaining a workflow of data processing by the fast Fourier transform circuit shown in FIG. 1, wherein the drawing shows a workflow of reading data out of the memory, storing it in the read buffer, a computation by the 4-point DFT computation unit, storing a computation result in the write buffer, and writing data coming from the write buffer in the memory.

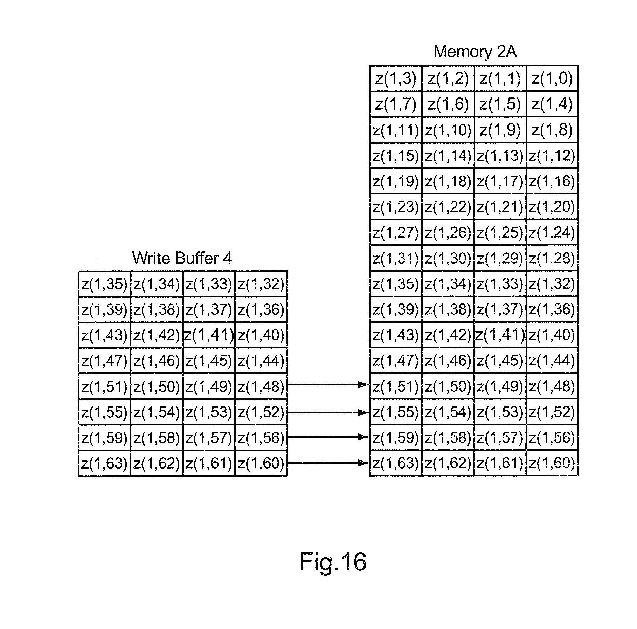

FIG. 16 is a drawing for explaining a workflow of data processing by the fast Fourier transform circuit shown in FIG. 1, wherein the drawing shows a workflow of writing data coming from the write buffer in the memory, at the time of a process end of a first stage.

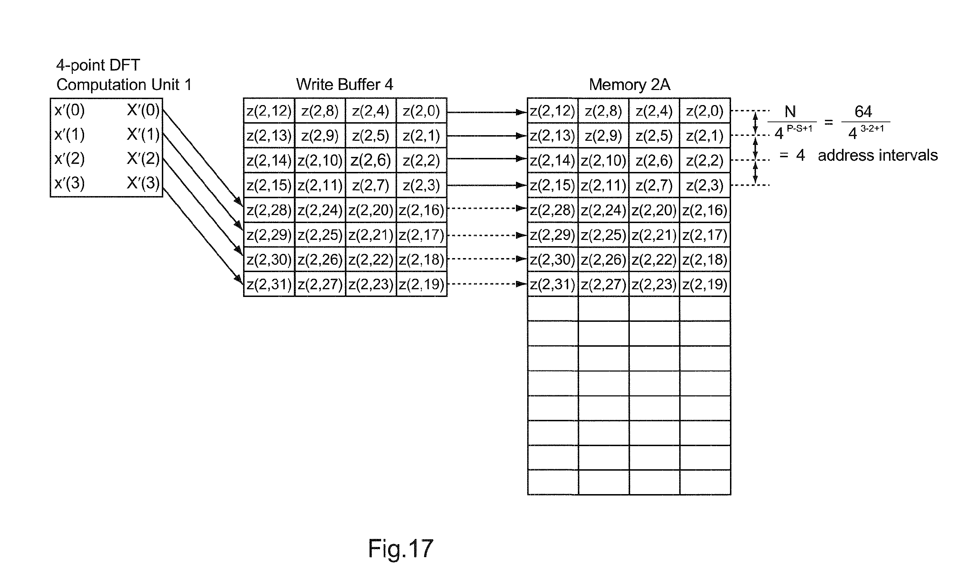

FIG. 17 is a drawing for explaining a workflow of data processing by the fast Fourier transform circuit shown in FIG. 1, wherein the drawing explains writing data in the memory, in a second stage.

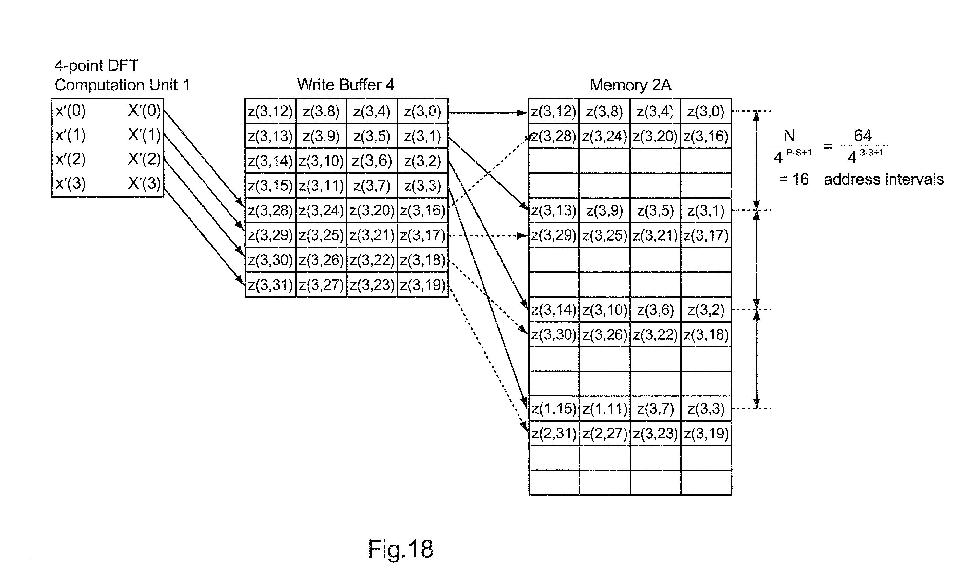

FIG. 18 is a drawing for explaining a workflow of data processing by the fast Fourier transform circuit shown in FIG. 1, wherein the drawing explains writing data in the memory, in a third stage.

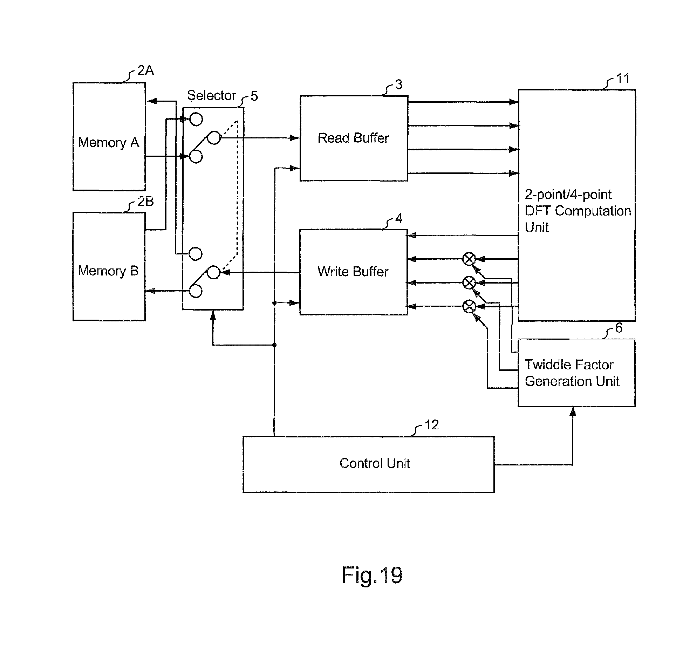

FIG. 19 is a block diagram showing a fast Fourier transform circuit according to a second embodiment of the present invention.

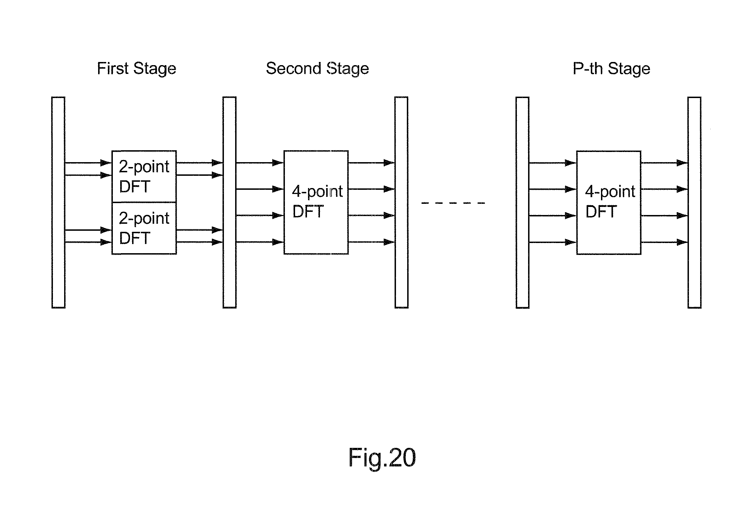

FIG. 20 is a drawing that shows a configuration example of a computation by a 2-point/4-point DFT computation unit in the fast Fourier transform circuit shown in FIG. 19.

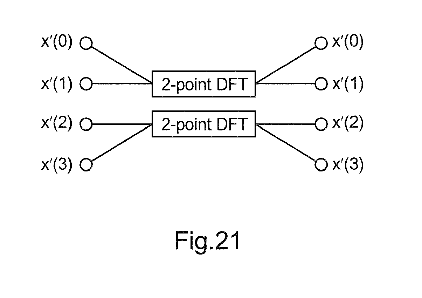

FIG. 21 is a drawing that shows a configuration of a 2-point DFT to be used in a process of a first stage by the 2-point/4-point DFT computation unit in the fast Fourier transform circuit shown in FIG. 19.

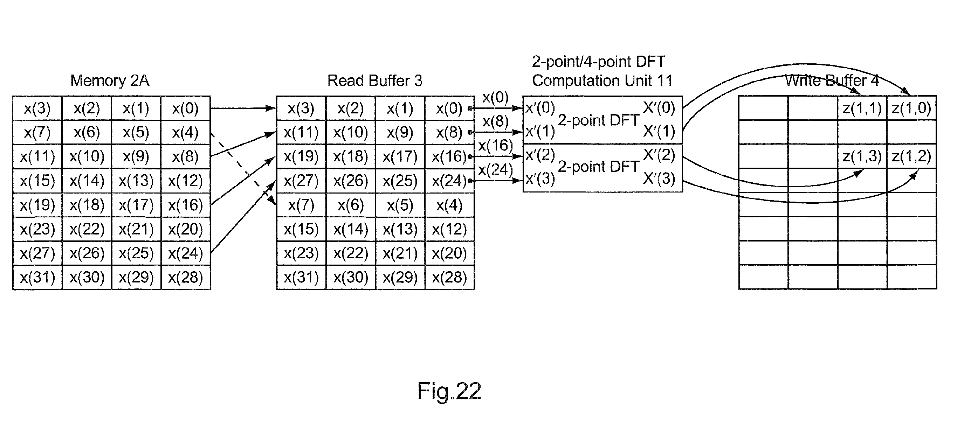

FIG. 22 is a drawing that shows a workflow of reading data out of a memory, storing it in a read buffer, a computation by the 2-point/4-point DFT computation unit, and storing a computation result in a write buffer, at the time when a computation of the first stage is executed by the 2-point/4-point DFT computation unit in the fast Fourier transform circuit shown in FIG. 19.

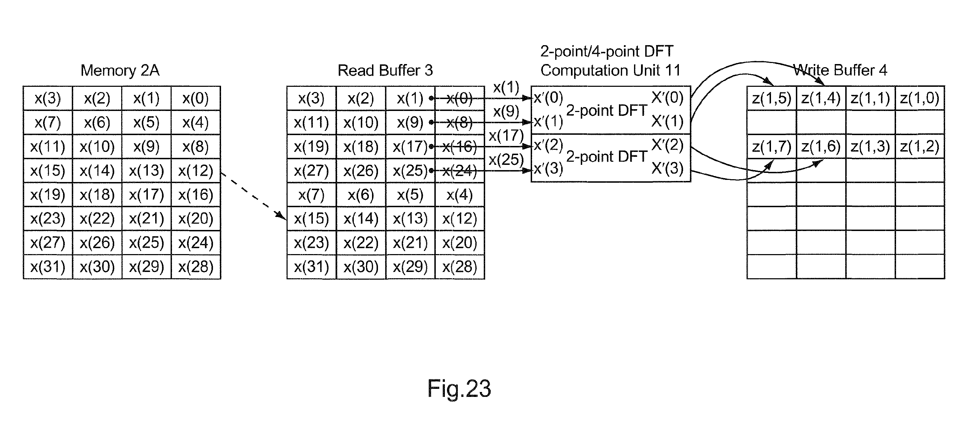

FIG. 23 is a drawing that shows a workflow of reading data out of the memory, storing it in the read buffer, a computation by the 2-point/4-point DFT computation unit, and storing a computation result in the write buffer, at the time when a computation of the first stage is executed by the 2-point/4-point DFT computation unit in the fast Fourier transform circuit shown in FIG. 19.

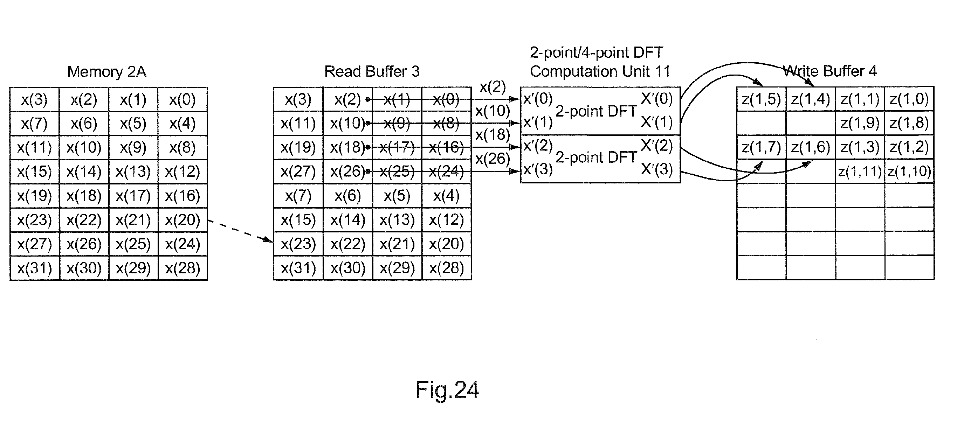

FIG. 24 is a drawing that shows a workflow of reading data out of the memory, storing it in the read buffer, a computation by the 2-point/4-point DFT computation unit, and storing a computation result in the write buffer, at the time when a computation of the first stage is executed by the 2-point/4-point DFT computation unit in the fast Fourier transform circuit shown in FIG. 19.

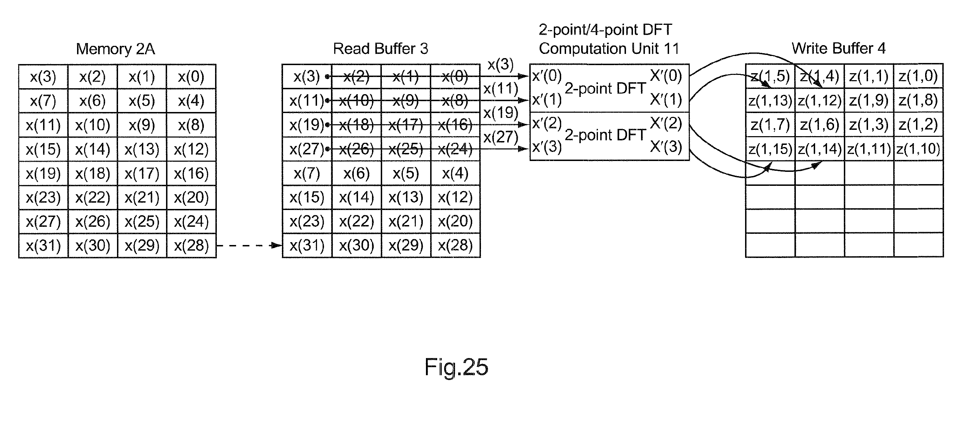

FIG. 25 is a drawing that shows a workflow of reading data out of the memory, storing it in the read buffer, a computation by the 2-point/4-point DFT computation unit, and storing a computation result in the write buffer, at the time when a computation of the first stage is executed by the 2-point/4-point DFT computation unit in the fast Fourier transform circuit shown in FIG. 19.

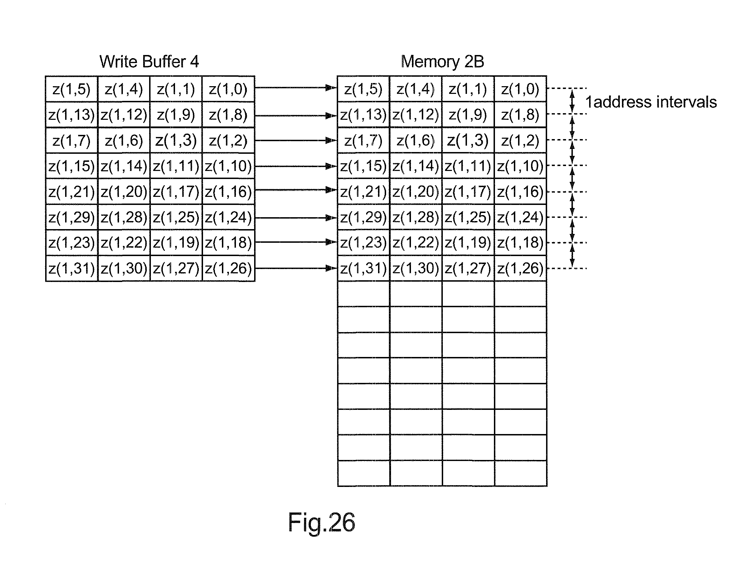

FIG. 26 is a drawing that shows a workflow of writing data coming from the write buffer in a memory, at the time when a computation of the first stage is executed by the 2-point/4-point DFT computation unit in the fast Fourier transform circuit shown in FIG. 19.

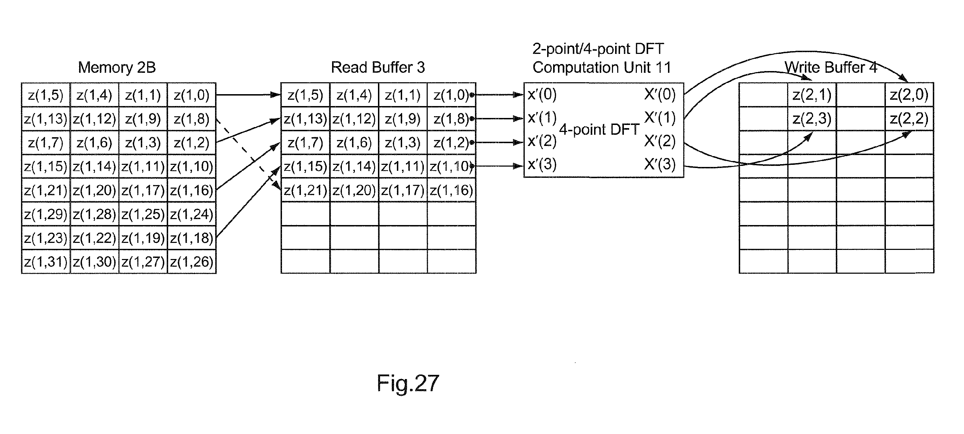

FIG. 27 is a drawing that shows a workflow of reading data out of the memory, storing it in the read buffer, a computation by the 2-point/4-point DFT computation unit, and storing a computation result in the write buffer, at the time when a computation of the second stage is executed by the 2-point/4-point DFT computation unit in the fast Fourier transform circuit shown in FIG. 19.

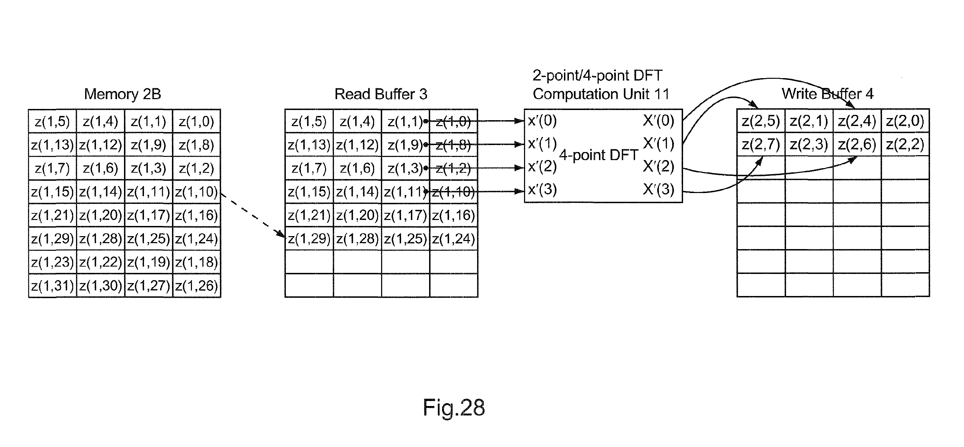

FIG. 28 is a drawing that shows a workflow of reading data out of the memory, storing it in the read buffer, a computation by the 2-point/4-point DFT computation unit, and storing a computation result in the write buffer, at the time when a computation of the second stage is executed by the 2-point/4-point DFT computation unit in the fast Fourier transform circuit shown in FIG. 19.

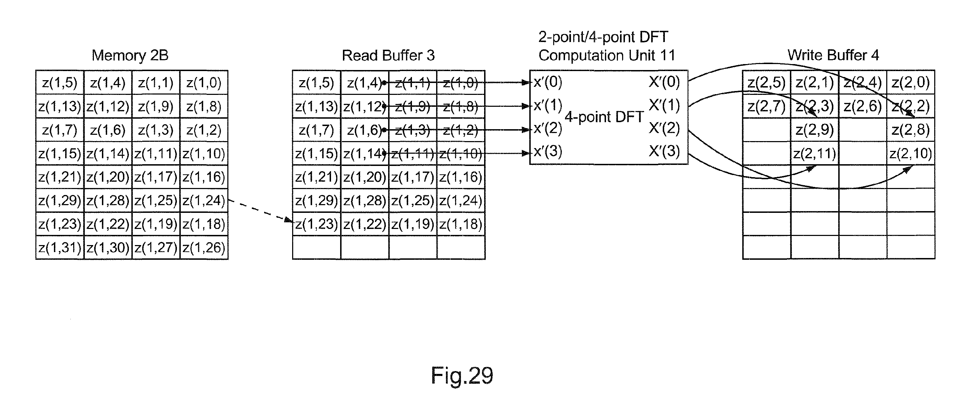

FIG. 29 is a drawing that shows a workflow of reading data out of the memory, storing it in the read buffer, a computation by the 2-point/4-point DFT computation unit, and storing a computation result in the write buffer, at the time when a computation of the second stage is executed by the 2-point/4-point DFT computation unit in the fast Fourier transform circuit shown in FIG. 19.

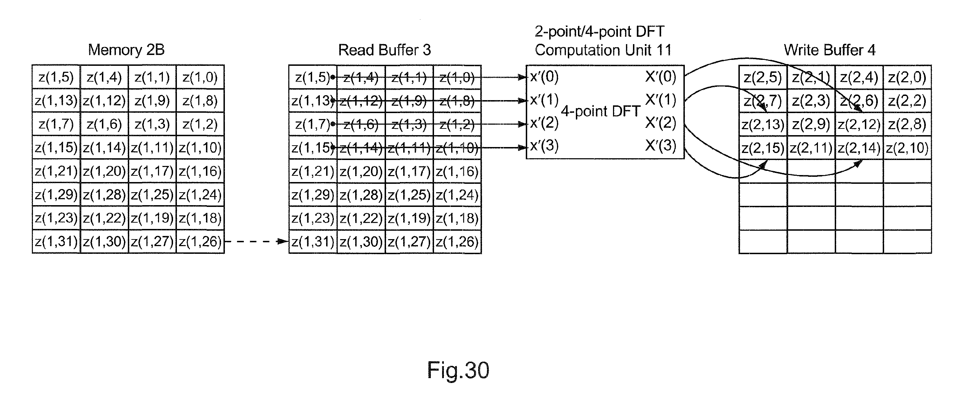

FIG. 30 is a drawing that shows a workflow of reading data out of the memory, storing it in the read buffer, a computation by the 2-point/4-point DFT computation unit, and storing a computation result in the write buffer, at the time when a computation of the second stage is executed by the 2-point/4-point DFT computation unit in the fast Fourier transform circuit shown in FIG. 19.

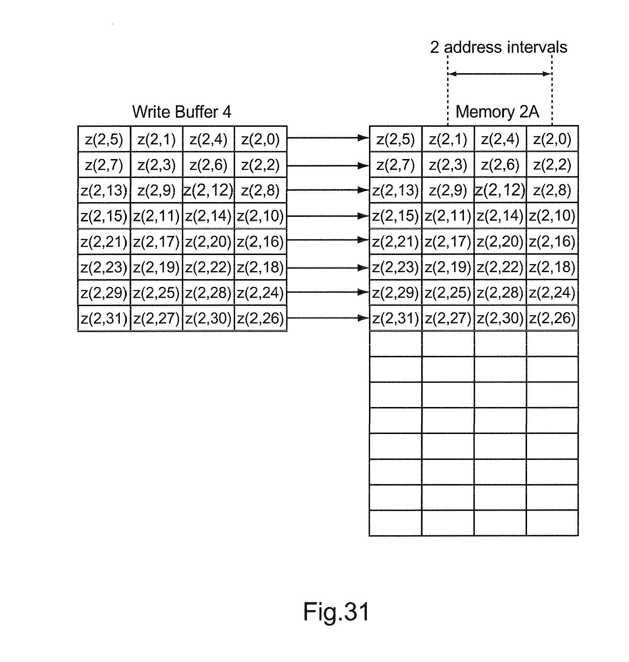

FIG. 31 is a drawing that shows a workflow of writing data coming from the write buffer in the memory, at the time when a computation of the second stage is executed by the 2-point/4-point DFT computation unit in the fast Fourier transform circuit shown in FIG. 19.

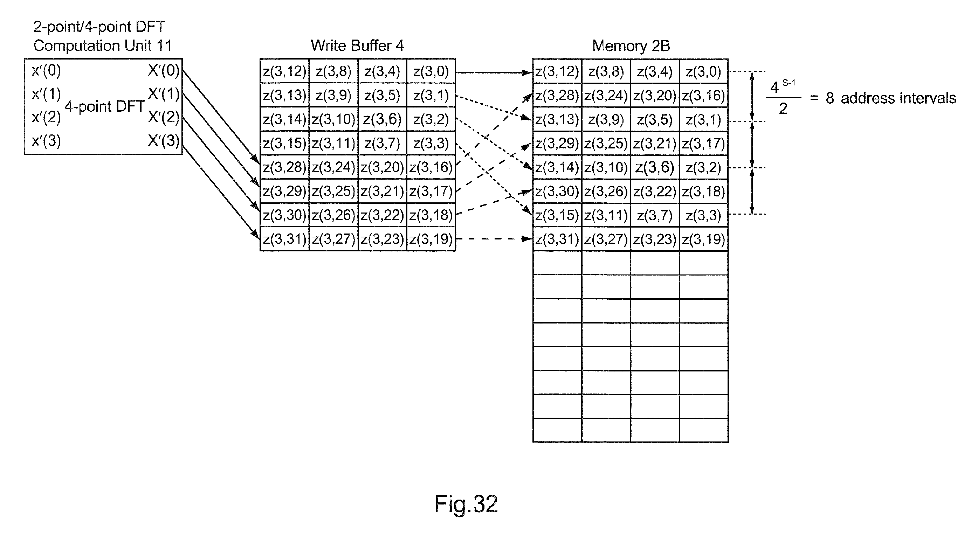

FIG. 32 is a drawing that shows a workflow of storing a computation result obtained by the 2-point/4-point DFT computation unit in the write buffer, and writing data coming from the write buffer in the memory, at the time when a computation of the third stage is executed by the 2-point/4-point DFT computation unit in the fast Fourier transform circuit shown in FIG. 19.

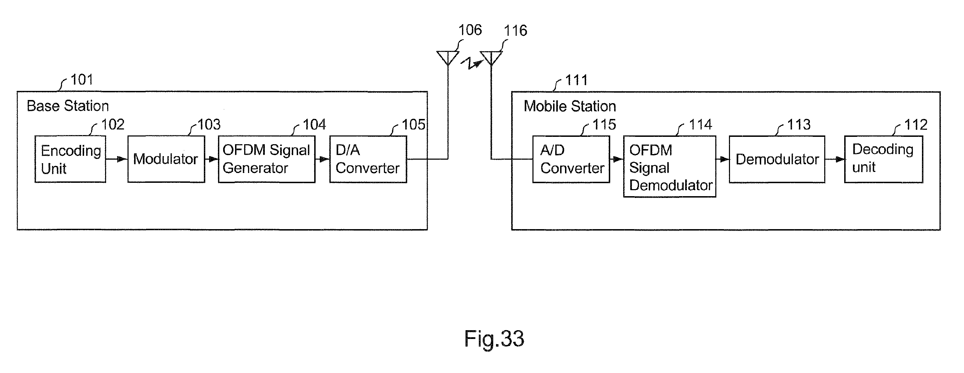

FIG. 33 is a drawing that shows an example of an overall configuration of a communication system using an OFDM method, wherein the drawing shows only a configuration with respect to a one-way communication. Description of Embodiments

Preferred embodiments according to the present invention are explained below with reference to the accompanied drawings.

(First Embodiment)

FIG. 1 is a block diagram showing a fast Fourier transform circuit according to a first embodiment of the present invention. On this occasion, described is a configuration example in the case where a radix B=4 is applied to the fast Fourier transform.

The fast Fourier transform circuit includes a 4-point DFT computation unit 1, memories 2A and 2B, a read buffer 3, a write buffer 4, a selector 5, a twiddle factor generation unit 6, and a control unit 7.

The 4-point DFT computation unit 1 executes a fast Fourier computation using a Discrete Fourier Transform applying a radix B=4 as a component.

The memories 2A and 2B store each of input/output data and intermediate values from a computation of a stage of $P = \log_B N$ executed by the 4-point DFT computation unit 1 with respect to data for which the number of data "N" is an exponent of a radix "B." The memories 2A and 2B have a capacity for storing "N" pieces of complex data, and one address is able to store four pieces of complex data.

Having a configuration of "B pieces of complex data×(N/B)×2 banks", the read buffer 3 stores data read out of the memories 2A and 2B, and outputs each data for radix "B" to the 4-point DFT computation unit 1. The read buffer 3 has a configuration including 2 banks for "N" pieces of complex data. Therefore, while one bank reads data out of the memories 2A and 2B, the other bank can output data to the 4-point DFT computation unit 1.

Having a configuration of "B pieces of complex data×(N/B)×2 banks", the write buffer 4 stores a computation result of each stage, which is obtained by the 4-point DFT computation unit 1, and writes it in the memories 2A and 2B. The write buffer 4 has a configuration including 2 banks for "N" pieces of complex data. Therefore, while one bank writes a computation result in the memories 2A and 2B, the other bank can receive a computation result from the 4-point DFT computation unit 1.

The selector 5 selects a read source and a write destination in the memories 2A and 2B. Namely, the selector 5 controls in such a way that one of the memories 2A and 2B works as a read side and the other of them works as a write side. Then, there is no chance that either of the memories 2A and 2B has reading operation and writing operation together at the same time.

The twiddle factor generation unit 6 generates a twiddle factor by which an output from the 4-point DFT computation unit 1 is multiplied. Since the "twiddle factor" is well known in the field of the fast Fourier transform, an explanation of it is omitted here. In an example that FIG. 6 shows, a twiddle factor as an output from the twiddle factor generation unit 16 and an output from the 4-point DFT computation unit 15 are multiplied together prior to writing in the write buffer 4. Alternatively, the multiplication may be done at the time of writing data coming from the write buffer 4 in the memories.

Generating read addresses as well as write addresses in the memories 2A and 2B, and also generating addresses for the read buffer 3 as well as the write buffer 4, the control unit 7 controls writing a computation result produced by the computation unit in the memories in such a way that sequential order of reading data from the memories becomes the same at each stage with respect to computations for a plurality of stages, which the computation unit executes for target data. Furthermore, the control unit 7 controls generating a twiddle factor by the twiddle factor generation unit 6; and also regulates and controls the number of computations by the 4-point DFT computation unit as well as the processing stages.

Besides a memory A10 and a memory B11, additionally an input memory and an output memory may individually be provided. In such a case, the selector 12 has a configuration that makes it possible to access these memories.

(Explanation of Fast Fourier Transform)

FIG. 2 is a signal flow diagram for explaining operations of the 4-point DFT computation unit 1 in the fast Fourier transform circuit shown in FIG. 1. On this occasion, shown is a case of a radix B = 4, and the number of data N = 16.

A fast Fourier transform on the basis of the Cooley-Tukey algorithm can be broken into a group of DFT computations of $P = \log_B N$ times; where the number of data is expressed as "N" (the "N" is a power of a radix "B"). A group of DFT computations at a time is referred to as a stage; and then stages are referred to as a first stage, a second stage, - - - , a P-th stage, starting from the input side. In the case of a radix B = 4, and the number of data N = 16, the number of stages P = 2, and four 4-point DFT computations are executed at each stage.

Known is a fact that a fast Fourier transform on the basis of the Cooley-Tukey algorithm can have two types of configurations; namely, a decimation-in-time type and a decimation-in-frequency type; depending on a way of breaking down into a 2-point DFT and a 4-point DFT. On this occasion, a fast Fourier transform having a configuration of a decimation-in-frequency type with radix-4 is explained as an example.

FIG. 3 is a drawing for explaining a configuration of a 4-point DFT in a fast Fourier transform applying radix-4. In the 4-point DFT, 4-point complex data X'(m) is output for 4-point complex data; x'(m), m = 0, 1, 2, & 3. The complex data X'(m) being output is to be expressed as described below, where "j" is the imaginary unit.

{Math. 1}

$$X'(0)=x'(0)+x'(1)+x'(2)+x'(3)$$
$$X'(1)=x'(0)-j\cdot x'(1)-x'(2)+j\cdot x'(3)$$
$$X'(2)=x'(0)-x'(1)+x'(2)-x'(3)$$
$$X'(3)=x'(0)+jx'(1)-x'(2)-j\cdot x'(3) \qquad \cdots (1)$$

The fast Fourier transform explained with reference to FIG. 2 and FIG. 3 is a commonly-used transformation.

(A way of storing data in a memory)

FIG. 4 is a drawing for explaining a typical example of storing complex data in a memory. Where addresses in the case of storing one piece of complex data at one address are expressed as "Ai" (i = 0, 1, - - - (N - 1), and "N" is the number of data (the number of FFT points)), continuous four pieces of complex data are stored at one physical address in the memory (Contents of a plurality of addresses can be read out continuously by means of specifying an address). Although 4 pieces of complex data; i.e., Ai, Ai+1, Ai+2, and Ai+3 from the right; are stored at one physical address, i.e., B(i/4), in the example shown in FIG. 4, a location for storing data is not limited to any certain position unless a circuit configuration does not become complicated. In order to explain in a straightforward way, the following explanation is made on the premise of storing data as shown in FIG. 4.

(Read addresses as well as write addresses in the memories)

FIG. 5 is a drawing for explaining a conventional method of calculating addresses for writing in a memory. On this occasion, described is a case of a radix B = 4, and the number of data N = 16.
In a fast Fourier transform of a decimation-in-frequency type, output data of a DFT computation at an S-th stage (wherein S = 1, 2, - - -, P) is stored in such a manner as described below, in general. It is assumed that an input data series x(n) is stored, starting from a least significant address side in the memory, so as to be arranged in ascending order along a time axis. On this occasion, an explanation is made on the premise that a following write address WA (S, k, m) and a read address RA (S, k, m) are addresses in which each complex data is stored. The "k" represents sequential order of 4-point DFT computations, under the condition of k = 0 through (N/4 - 1).
The write address WA (S, k, m) is calculated by using the following expression. On this occasion, owing to the condition of m = 0, 1, 2, and 3, and 4-point DFT, four pieces of complex data are output per one DFT computation.

{Math. 2}

$$WA(S,k,m)=\frac{N}{4^S}\times m+\left(\frac{k}{4^{P-S}}\right)\times 4^{P-S+1}+(k \bmod 4^{P-S})$$

$$k=0...(\frac{N}{4}-1)$$

$$m=0...3 \qquad \cdots (2)$$

The "(a mod b)" represents taking a remainder after dividing "a" by "b." An example of N = 16 is as shown in FIG. 2. On this occasion, the read address RA (S, k, m) becomes obtained as RA (S, k, m) = WA (S, k, m).
By using these addresses as calculated, the addresses stored in the memory after completion of the final stage (P-th stage) are taken out by means of bit reversing. Accordingly, data after transformation is sorted in ascending order.
FIG. 6 is a drawing for explaining a method of calculating addresses for writing in the memories 2A and 2B of the fast Fourier transform circuit shown in FIG. 1.
In the embodiment shown in FIG. 1, the control unit 1 specifies write addresses and read addresses in the memories 2A and 2B. Then, with respect to computations at a stage of $P = \log_B N$ executed by the 4-point DFT computation unit 1 in relation to data, for which the number of data "N" is an exponent of a radix "B"; the control unit writes data, to be objective for the calculations in a subsequent stage, in the memories 2A and 2B in such a way that the data is arranged in sequential order of addresses, which enables reading out of the memories with the same address for each value obtained by dividing the number of data "N" by the radix "B" with respect to sequential order of the fast Fourier computations, i.e., k = 0, 1, - - -, N/B-1.

Specifically to describe, the control unit 1 specifies the write address WA (S, k, m); under the condition of m = 0, 1, - - -, B-1; for writing data coming from the write buffer 4 in either of the memories 2A and 2B, at each S-th stage; S = 1, 2, - - - P; with a sum value as a result of adding: a product as a result of multiplying a quotient by "m", the quotient being obtained by dividing the number of data "N" by a value of a radix "B" to the power of "P-S+1"; wherein "P-S" represents the number of stages remaining; a product as a result of multiplying a quotient by a value of the radix "B" to the power of "S", the quotient being obtained by dividing the sequential order number "k" by a value of the radix "B" to the power of "S-1"; and a remainder after dividing the sequential order number "k" by a value of the radix "B" to the power of "S-1." In the meantime, the control unit specifies the read address RA (S, k, m) for reading data coming from either of the memories 2B and 2A in the read buffer 3, at each S-th stage; S = 1, 2, - - - P; with a sum value as a result of adding: a product as a result of multiplying a quotient by "m", the quotient being obtained by dividing the number of data "N" by the radix "B"; and the sequential order number "k."

In the case of the radix-B = 4, the write address WA (S, k, m) is described with an expression shown below:

{Math. 3}

$$WA(S,k,m) = \frac{N}{4^{P-S+1}} \times m + \left(\frac{k}{4^{S-1}}\right) \times 4^S + (k \bmod 4^{S-1})$$

$$k = 0 ... \left(\frac{N}{4} - 1\right)$$

$$m = 0 ... 3 \qquad\qquad \cdot \cdot \cdot (3)$$

in the case of the radix-B = 4, the read address RA (S, k, m) is described with an expression shown below:

{Math. 4}

$$RA(S,k,m) = \frac{N}{4} \times m + k$$

$$k = 0 ... \left(\frac{N}{4} - 1\right)$$

$$m = 0 ... 3 \qquad\qquad \cdot \cdot \cdot (4)$$

By using addresses calculated in the way described above; a process of bit reversing becomes unnecessary, and the read address in the DFT computation at each stage can be maintained consistent, so that the read buffer 3 and the write buffer 4 can be introduced. Furthermore, a configuration by combining a DFT with the radix-B = 2 and a DFT with the radix-B = 4 can be implemented easily.

(Read buffer & write buffer)

The read buffer 3 and the write buffer 4 individually have a configuration including two banks, and each one of the banks has a capacity that enables storing "N" pieces of complex data. The configuration makes it possible to store data for "N/4" addresses of the memories 2A and 2B in each one bank, when four pieces of complex data in the case of the radix-B = 4 are stored at an address of the memories 2A and 2B. For explanation, these banks are called a bank #0, and a bank #1.

At the time of starting a DFT process for one stage, data for 4 addresses of the memories 2A and 2B is read out, and the data is stored in one of the banks of the read buffer 3. Four pieces of complex data are stored in RD (Bi'), wherein the RD (Bi') is read data for an address "Bi" of the memories 2A and 2B. This situation is expressed by using 'Ai' shown in FIG. 3, as described below.

{Math. 5}

$$RD(B_{i'}) = \{RD'(A_{4i'+3}), RD'(A_{4i'+2}), RD'(A_{4i'+1}), RD'(A_{4i'})\}$$
$$i'=\{0, 1, \ldots N/4-1\} \qquad \cdots (5)$$

Data of the read buffer 3 "RB" (rb, rn) at the time of executing a k-th DFT process is expressed as below; wherein the "rb" (= {0, 1}) is a bank number of the read buffer 3, and the "rn" is an address of the read buffer 3 (for one piece of complex data).

{Math. 6}

$$RB(rb, rn) = D(rn'+k)$$

$$rn' = \left(\frac{rn}{4}\right) \times \frac{N}{4} + k$$

$$rn=0\ldots15$$

$$k = 0\ldots(N/4-1) \qquad \cdots (6)$$

The 4-point DFT computation unit 1 executes a 4-point DFT process by using the data of the read buffer 3 stored in this way. N/4-process data of the 4-point DFT process is stored in the read buffer 3. In parallel with execution of the 4-point DFT process, subsequent N/4-process data of the 4-point DFT process is read out of the memories 2A and 2B, and it is stored in the other of the banks of the read buffer 3. Since four pieces of complex data are stored in one address of the memories 2A and 2B, data corresponding to one process of the 4-point DFT process can be read out of the memories 2A and 2B by way of one cycle. Then, 1-process data of the 4-point DFT process can be read out of the memories 2A and 2B at the same time as the DFT process, and therefore the 4-point DFT process can be executed by way of one cycle.

The same can also be applied to the write side. Four pieces of complex data to be output through one 4-point DFT process are stored in one of the banks of the write buffer 4; and in the meantime, four pieces of complex data stored in the other of the banks are written in the memories 2A and 2B. Then, one process of writing in the memories can be implemented, during execution of one DFT process.

Data of the write buffer 4 "WB" (wb, wn) is expressed as below; wherein the "wb" (= {0, 1}) is a bank number of the write buffer 4, the "wn" is an address of the write buffer 4, and output data of a k-th DFT process is X'(k, m); (wherein m = {0, 1, 2, 3}).

(a) In the case of S = 1;

{Math. 7}

$$WB(wb, wn) = X'(k, m)$$

$$wn=4\times(k \bmod 4)+m$$

$$k = 0, \ldots, (N/4-1) \qquad \cdots (7)$$

(b) In the case of S ≧ 2;

{Math. 8}

$$WB(wb, wn) = X'(k, m)$$

$$wn = 4 \times m + (k \bmod 4)$$

$$k = 0, \ldots, (N/4-1) \qquad \cdots (8)$$

At each stage, N/4-process data of the 4-point DFT process in the 4-point DFT computation unit 1 needs to be stored in the read buffer 3. Therefore, the 4-point DFT computation unit 1 does not execute a process during four cycles right after starting each stage, but reads data required for the process, out of the memories 2A and 2B, in order to store the data in the read buffer 3. After completion of reading out 4×(N/4) pieces of complex data, the bank of the read buffer 3 is switched, and then data is read out of the memories 2A and 2B, and stored in the read buffer 3. At the same time, data is read out of the other bank of the read buffer 3, and a process of the 4-point DFT computation unit 1 is executed.

Until results of four 4-point DFT processes are stored, the write buffer 4 does not write in the memories 2A and 2B. If once the N/4-process results of the 4-point DFT process are stored after starting the process, the write buffer 4 switches the bank, and then stores a result of a subsequent DFT process in the bank switched. Then, in parallel, the write buffer 4 writes a result of a DFT process, being stored in the other bank, in the memories 2A and 2B.

For a process of one stage, four cycles are required for each of reading out of the memories 2A and 2B to the read buffer 3, and writing from the write buffer 4 to the memories 2A and 2B. Therefore, a minimum execution cycle includes "N/4 + 4×2" cycles.

(Detailed Explanation of Operation)

FIG. 7 through FIG. 18 are drawings for explaining workflows of data processing by the fast Fourier transform circuit shown in FIG. 1. With reference to these drawings, operation of the fast Fourier transform circuit is explained below in detail. On this occasion, an example in the case of N=64 is explained. The operation described below is implemented through controlling each section by the control unit 7. Input data as an object of the process is stored in the memory 2A.

If once the input data is stored in the memory 2A, the control unit 7 controls each section, and starts operation from a first stage. The selector 5 switches a connection so as to read out from the memory 2A where the input data is stored.

FIG. 7 is a drawing that shows a workflow of reading data out of the memory 2A as a reading object, and storing it in the a read buffer 13. Until data for four words (16 pieces of complex data) is read out of the memory 2A at the time immediately after a start of the process, the data does not become ready, as required for a computation by the 4-point DFT computation unit 1. Therefore, the 4-point DFT computation unit 1 does not execute the computation, but only stores the data in the read buffer 3.

Each of FIG. 8 through FIG. 11 is a drawing that shows a workflow of reading data out of the memory 2A, storing it in the read buffer 3, a computation by the 4-point DFT computation unit 1, and storing a computation result in the write buffer 4.

Data for first four words; namely, x(0) to x(3), x(16) to x(19), x(32) to x(35), and x(48) to x(51); is read out of the memory 2A and stored in the read buffer 3, subsequently the 4-point DFT computation unit 1 executes a 4-point DFT computation in due order (FIG. 8). Then, while computation results, i.e., z(1, 0) to z(1, 3), from the 4-point DFT computation are stored in the write buffer 4; data for each one word, needed for subsequent 4-point DFT calculations, is read out of the memory 2A, and stored in the read buffer 3. In the course of one DFT computation, data of at least one word (four pieces of complex data) is read out of the memory 2A, and stored in the read buffer 3. In other words, while the 4-point DFT computation unit 1 is processing the data of first four points; x(0), x(16), x(32), and x(48); the read buffer 3 stores data of at least one word; i.e., x(4) to x(7), coming from the memory 2A.

In the same way hereafter, a computation by the 4-point DFT computation unit 1, storing a result of the computation in the write buffer 4, reading data out of the memory 2A, and storing the data in the read buffer 3 are executed in due order (FIG. 9 to FIG. 11).

Each of FIG. 12 through FIG. 15 is a drawing that shows a workflow of reading data out of the memory 2A, storing it in the read buffer 3, a computation by the 4-point DFT computation unit 1, storing a computation result in the write buffer 4, and writing data coming from the write buffer 4 in the memory 2B. After results of N/4 = 16 pieces of complex data are stored in the write buffer 4 since a start of the process, the data coming from the write buffer 4 is written in the memory 2B. Four pieces of complex data are written in one word of the memory 2B in due order. On this occasion, the 4-point DFT computation, reading the data out of the memory 2A, and storing the data in the read buffer 3 are executed at the same time.

The operation described above is repeated until the number of 4-point DFT computations reaches N/4.

FIG. 16 is a drawing that shows a workflow of writing data coming from the write buffer 4 in the memory 2B, at the time of a process end of a first stage. At the time when the number of 4-point DFT computations reaches N/4, the write buffer 4 still has unwritten data remaining for four words (16 pieces of complex data), which is the data, z(1, 48) to z(1, 60) that are not yet written in the memory 2B. Then, the data is written in the memory in due order, and the process of the first stage finishes (FIG. 16).

The operation described above is repeated for a second stage through a P-th stage, and then FFT operation finishes.

FIG. 17 is a drawing that explains writing data in the memory 2A in the second stage. Meanwhile, FIG. 18 is a drawing that explains writing data in the memory 2B in a third stage. In the second and its following stages, the selector 5 switches connection at each stage in such a way as to read data out of either one of the memories 2B and 2A, in which computation results are stored in a preceding stage. Then, a computation is executed, and a result of the computation is stored in the other one of the memories 2A and 2B. Thus, in this case, the data is written in the memory 2A in the second stage, and meanwhile the data is written in the memory 3A in the third stage.

In the second and its following stages, the way of writing a computation result of the 4-point DFT in the write buffer 4 is different from that of the first stage, as shown in the expression (8). In the meantime, data writing addresses in the memories 2A and 2B are at N/4P-S+1 intervals in accordance with the expression (3). In the present example, according to N = 64 and P=$\log_4 64$ = 3, an interval for addresses (each address for storing one piece of complex data) is "4" and "16" in the second stage and the third stage, respectively.

Incidentally, "z(S, 4×k + i)" in FIG. 8 through FIG. 18 represents a k-th output of the 4-point DFT, wherein k = 0 to (N/4 - 1), and i = 0 to 3.

In the explanation with reference to FIG. 7 through FIG. 18; although it is assumed that input data as an object of the process is stored in the memory 2A, the process can be executed in the same manner through writing a computation result in the memory 2A, even when the input data is stored in the memory 2B. Incidentally, in the fast Fourier transform circuit shown in FIG. 1; at the time when the output of the 4-point DFT computation unit 1 is written in the write buffer, the output is multiplied by a twiddle factor generated by the twiddle factor generation unit 6. Since this operation is self-evident in the field of the fast Fourier transform, explanation is omitted.

(Advantageous Effect)

In the embodiment described above, the read buffer 3 and the write buffer 4 are introduced, while ways are contrived with respect to laying out of complex data in the memories 2A and 2B as well as writing output data, coming from the 4-point DFT computation unit 1, in the memories 2A and 2B. Thus, even in the case of executing the 4-point DFT through one cycle, it is not needed to segment the memories unnecessarily. Accordingly, any addition of a decoding circuit and a test circuit to the memories 2A and 2B becomes unnecessary so that a scale of the circuit can be reduced. For example, if the memories 2A and 2B are individually segmented into four portions, a decoding circuit and a test circuit with the size of 6 memories are needed. Fortunately, according to the present invention, those circuits can be downsized.

Moreover, while the number of memories is reduced, the number of wire placements in a physical layout at the time of manufacturing LSI can be reduced approximately to a quarter so as to enable easy layout work. Thus, a downsized space (cutting the cost of chips) can be materialized.

(Second Embodiment)

FIG. 19 is a block diagram showing a fast Fourier transform circuit according to a second embodiment of the present invention. A fundamental configuration of this embodiment is equivalent to that of the first embodiment. The only difference from the first embodiment is a fact that the configuration of this embodiment enables execution of a fast Fourier transform when the number of data "N" is a power of B/2 = 2, but not a power of B = 4 (namely, $\log_2 N$ is an odd number).

The fast Fourier transform circuit shown in FIG. 19 includes memories 2A and 2B, a read buffer 3, a write buffer 4, a selector 5, a twiddle factor generation unit 6, a 2-point/4-point DFT computation unit 11, and a control unit 12. The memories 2A and 2B, the read buffer 3, the write buffer 4, the selector 5, and the twiddle factor generation unit 6 are the same as those shown in FIG. 1, and explanation of these components is omitted in this embodiment. The 2-point/4-point DFT computation unit 11 can execute one 4-point DFT computation, or two 2-point DFT computations through one cycle. The computations are controlled by the control unit 12.

FIG. 20 is a drawing that shows a configuration example of a computation by the 2-point/4-point DFT computation unit 11 in the fast Fourier transform circuit shown in FIG. 19. A fast Fourier transform with the number of data 'N' can be broken into a group of DFT computations (stages) of P = $\log_2(N/2)$ + 1 times. In an example shown in FIG. 20, a first stage includes two 2-point DFT computations. Meanwhile, each of a second and its following stages includes a 4-point DFT computation.

FIG. 21 is a drawing that shows a configuration of the 2-point DFT computations to be used in a process of the first stage. On this occasion, output data X'(m) from the two 2-point DFT computations is expressed as described below; wherein X'(m) and x'(m) are complex numbers, and "j"represents an imaginary unit.

{Math. 9}

$$X'(0)=x'(0)+x'(1)$$
$$X'(1)=x'(0)-x'(1)$$
$$X'(2)=x'(2)-x'(3)$$
$$X'(3)=x'(2)-x'(3) \qquad \cdots (9)$$

According to this configuration, at each stage of P = log B/2 (N/2) + 1, the control unit 12 writes data, to be objective for the calculations in a subsequent stage, in the memories in such a way that the data is arranged in sequential order of addresses, which enables reading out of the memories with the same address for each value obtained by dividing the number of data "N" by a value of "B" with respect to sequential order of the fast Fourier computations, i.e., k = 0, 1, - - -, N/B-1.

Specifically to describe, the control unit 12 specifies the write address WA (S, k, m); under the condition of m = 0, 1, - - -, B-1; for writing data in the memories 2A and 2B at a stage for executing two sets of B/2-point Discrete Fourier Transform, with a value; the value being a result of adding twice "k" and "m" under the condition of m = 0, 1, - - -, B/2-1 and the value being a result of adding "N/2", twice "k", and "m-B/2" under the condition of m = B/2, - - -, B-1. Moreover, the control unit 12 specifies the write address WA (S, k, m) for writing data in the memories 2A and 2B at each stage for executing a B-point Discrete Fourier Transform, with a sum value as a result of adding: a product as a result of multiplying a quotient by "m", the quotient being obtained by dividing the number of data "N" by a value of "B" to the power of "P-S+1"; wherein "P-S" represents the number of stages remaining; a product as a result of multiplying a quotient by a half value of the value of "B" to the power of "S", the quotient being obtained by dividing twice the sequential order number "k" by the value of "B" to the power of "S-1"; and a remainder after dividing the sequential order number "k" by a half value of the value of "B" to the power of "S-1." In the meantime, the control unit 12 specifies the read address RA (S, k, m) for reading data from the memories 2B and 2A at each of all the 'P' stages with a sum value as a result of adding: a product as a result of multiplying a quotient by "m", the quotient being obtained by dividing the number of data "N" by the value of "B"; and the sequential order number "k."

In the case of a configuration shown in FIG. 20, two sets of 2-point DFT computation are executed in the first stage. Therefore, being different from what the expression (3) describes, the write address is described with an expression shown below. Meanwhile, the read address is the same as what the expression (4) describes:

{Math. 10}

$$WA(S,k,m)= \begin{cases} 2 \cdot k+m & \cdots \quad m=0,1のとき \\ \dfrac{N}{2}+2 \cdot k+(m-2) & \cdots \quad m=2,3のとき \end{cases}$$

$$k=0...(\dfrac{N}{4}-1)$$

$$m=0...3 \qquad \cdots (10)$$

In the second and its following stages, a 4-point DFT computation is executed. Meanwhile, being different from what Expression 3 describes, the write address is described with an expression shown below (S ≥ 2). Then, the read address is the same as what Expression 4 describes, as it is in the first stage.

{Math. 11}

$$WA(S,k,m) = \frac{N}{4^{P-S+1}} \times m + \left(\frac{2 \cdot k}{4^{S-1}}\right) \times \frac{4^S}{2} + \left(k \bmod \frac{4^{S-1}}{2}\right)$$

$$k = 0 \ldots \left(\frac{N}{4} - 1\right)$$

$$m = 0 \ldots 3 \qquad\qquad \cdots (11)$$

A storage address in the read buffer 3, for data read out of the memories 2A and 2B, is the same as what Expression 6 describes. A write address in the write buffer 4 is specific as described below, depending on the processing stages.

 a) The write address in the write buffer 4 at the first stage;

{Math. 12}

$$WB(wb,wn) = X'(k,m)$$

$$wn = 2 \times (k \bmod 4) + \left(\frac{m}{2}\right) \times 8 + (m \bmod 2)$$

$$m = 0 \ldots 3 \qquad\qquad \cdots (12)$$

 b) The write address in the write buffer at the second stage;

{Math. 13}

$$WB(wb,wn) = X'(k,m)$$

$$wn = 2 \times (m \bmod 4) + \left(\frac{(k \bmod 4)}{2}\right) \times 8 + (k \bmod 2)$$

$$m = 0 \ldots 3 \qquad\qquad \cdots (13)$$

 c) The write address in the write buffer at the third and its following stages;

The same as the expression (8).

(Example of Operation)

An example of operation using the addresses described above is explained below with reference to FIG. 22 through FIG. 32. In the following explanation, the number of data is assumed as, N = 32.
Each of FIG. 22 through FIG. 25 is a drawing that shows a workflow at the first stage, of reading data out of the memory 2A, storing the data in the read buffer 3, a computation by the 2-point/4-point DFT computation unit 11, and storing a computation result in the write buffer 4.
Prior to a start of a 2-point DFT process, at first, data for first four words; namely, x(0) to x(3), x(8) to x(11), x(16) to x(19), and x(24) to x(27); is read out of the memory 2A, and the data is stored in the read buffer 3. Subsequently, the 2-point/4-point DFT computation unit 11 executes the 2-point DFT computation with respect to these data. In the meantime, subsequent data; namely, x(4) to x(7); is read out of the memory 2A and stored in the read buffer 3. A computation result from the 2-point/4-point DFT computation unit 11 is stored in the write buffer 4 (Steps described above are shown in FIG. 22). In the same way hereafter, data of each one word (four pieces of complex data) is read out of the memory 2A and stored in the read buffer 3. Then, the 2-point/4-point DFT computation unit 11 executes the 2-point DFT computation, and a computation result is stored in the write buffer 4 (Steps described above are shown in FIG. 23 through FIG. 25).

FIG. 26 is a drawing that shows a workflow at the first stage, of writing data coming from the write buffer 4 in the memory 2B.

In parallel with writing computation results of 5th to 8th 2-points DFT computations by the 2-point/4-point DFT computation unit 11, in the write buffer 4, data of each one word (four pieces of complex data) from the data stored in the write buffer 4 is written in the memory 2B. After completion of eight 2-points DFT computations, the data stored in the write buffer is written in the memory B. At the time, the data is written in the memory 2B at 1-address intervals.

Each of FIG. 27 through FIG. 31 is a drawing that explains operation at the second stage, and these drawings are equivalent to FIG. 22 through FIG. 26. Except a fact that a writing address in the write buffer 4 is different, the operation at the second stage is the same as the operation at the first stage, already explained above with reference to FIG. 22 through FIG. 26, and therefore explanation is omitted.

FIG. 32 is a drawing that shows a workflow at the third stage, of storing a computation result obtained by the 2-point/4-point DFT computation unit 11 in the write buffer 4, and writing data coming from the write buffer 4 in the memory 2B. Except a fact that address intervals for writing data in the memory 2B is as described with an expression shown below, the operation in this situation is the same as that of the first embodiment explained with reference to FIG. 8 through FIG. 16, and therefore explanation is omitted.

{Math. 14}

$$address\ intervals\ =\ \left\lceil \frac{4^{S-1}}{2} \right\rceil \qquad \cdots (14)$$

Although the above explanation is made on the basis of a fast Fourier transform having a configuration of a decimation-in-frequency type as an example, the present invention can also be embodied with a fast Fourier transform having a configuration of a decimation-in-time type.

{Industrial Applicability}

In recent years, Orthogonal Frequency Division Multiplexing (OFDM), which is a wireless access system with a high frequency usage efficiency, is used in the field of wireless communication, aiming at a communication rate improvement. For the digital terrestrial broadcasting, wireless Local Area Network (LAN), as well as the mobile communication, and also Long Term Evolution (LTE) that Third Generation Partnership Project (3GPP) is promoting with a new communication method, OFDM is employed.

FIG. 33 is a drawing that shows an example of an overall configuration of a communication system using an OFDM method. In this explanation, the drawing shows only a configuration with respect to a one-way communication in order to simplify the explanation.

The communication system has a base station 101. The base station 101 includes: an encoding unit 102, a modulator 103, an OFDM signal generator, a D/A converter 105, and a plurality of antennas 106 (the drawing shows only one of them). The communication system also has a mobile station 111, such as a user terminal, which communicates with the base station 101. The mobile station 111 includes: a decoding unit 112, a demodulator 113, an OFDM signal demodulator 114, an A/D converter 115, and a plurality of antennas 116 (the drawing shows only one of them).

In the base station 101, for example, a CPU (not shown) of the base station 101 inputs data, to be transmitted, as information bits into the encoding unit 102. Then, the encoding unit 102 carries out adding a CRC (Cyclic Redundancy Check) and convolutional coding with respect to the input information bits. Then, the modulator 103 modulates the encoded input data. The OFDM signal generator 104 performs mapping the modulated data onto a frequency axis, and transforms the data on the frequency axis into data on a time axis by way of Inverse Discrete Fourier Transformation. Then, the transformed data is output to the D/A converter 105. The D/A converter 105 converts a digital signal, which the OFDM signal generator 104 outputs, into an analog signal. Then, the modulated data, converted into the analog signal, is transmitted through the plurality of antennas 106.

The mobile station 111 at a receiving side receives the data, transmitted out of the antennas 106 of the transmission side 101, through the plurality of antennas 116. At this point, it is taken into account that the data received by the antennas 116 is affected by noise during the time of propagating through space after being launched from the antennas 106. The data received by the antennas 116 is input into the A/D converter 115. The A/D converter 115 converts the analog signal of the input data into a digital signal. The A/D converter 115 outputs the converted digital signal to the OFDM signal demodulator 114. Then, the OFDM signal demodulator 114 transforms the digital signal on the time axis, which is output from the A/D converter 115, into data on a frequency axis by means of a discrete Fourier Transform, and carries out mapping the data on an IQ plane. The demodulator 113 demodulates the data output from the OFDM signal demodulator 114. Then, the demodulator 113 outputs the demodulated data, obtained by means of demodulation, to the decoding unit 112. The decoding unit 112 performs error correction decoding with respect to the demodulated input data. Using decoded data obtained as a result, a processing circuit in a later stage, such as a CPU, carries out a predetermined process.

A discrete Fourier Transform is used in the OFDM signal generator 104 and the OFDM signal demodulator 114 of a communication system using the OFDM method. The discrete Fourier Transform (DFT) has a great amount of computations. According to the specification of LTE, the number of sub-carriers in a 20-MHz band is 1200. To use DFT for the computations, it is needed to execute a set of computations 1200 times, where a set of computations includes 1199 operations of multiplication and addition of complex numbers. Moreover, these computations must be done within 66.67 microseconds of 10 FDM symbol periods.

As an algorithm for reducing the amount of computations, for example, used is a fast Fourier transform on the basis of the Cooley-Tukey algorithm as described above. By combining 2-point DFTs and 4-point DFTs, the amount of computations in the case of the number of sub-carriers being 1200 becomes as described below:

2048 operations of multiplication and addition of complex numbers + (2048 computations; where one computation includes 3 additions of complex numbers and 1 multiplication of complex numbers) × 5 times.

On this occasion, the number of data needs to be a power of 2, in the case of a fast Fourier transform on the basis of the Cooley-Tukey algorithm. Therefore, the number of data is 2048, being greater than 1200 and a minimum number as a power of 2.

In an actual operation, sometimes a twiddle factor as an object of a multiplication of complex numbers may be expressed with only a real part or an imaginary part, and therefore the number of multiplications may be less than those describe above. Nevertheless, remaining is a fact that the amount of computations is still great.

A fast Fourier transform using a 4-point DFT as a component can reduce the amount of computations. Even so, for materializing the computations as described above with hardware, typically adopted is a configuration in which input/output data is stored in a memory. In order to execute a 4-point DFT, it is needed to pick up four pieces of complex data out of a memory, as input data. Then, if the memory is with a single port, four cycles are needed. A memory with multiple ports, or segmenting a memory with a single port into four portions makes it possible to read four pieces of complex data out of the memory through one cycle. Unfortunately, an area of the memory cell itself becomes large in the former, and a test circuit and/or a decoder circuit attached to a memory macro in the latter leads to an increase of an area. Furthermore, segmenting the memory quadruples the number of wire placements. Such inconvenience increases the difficulty in a layout design at the time of manufacturing an LSI, so that it may be conceivably needed to enlarge an area of the LSI for enabling wiring work.

In such a case, applying the fast Fourier transform circuit according to the embodiment described above makes it possible to execute one 4-point DFT computation through one cycle, without using a memory having multiple ports or segmenting a memory, so as to reduce process time.

Furthermore, the present invention can also be utilized in a measuring unit that performs a Fourier transform, such as a spectrum analyzer.

{Reference Signs List}

1. 4-point DFT computation unit
2A and 2B. memories
3. read buffer

4. write buffer

5. selector

6. twiddle factor generation unit

7 and 12. control unit

11. 2-point/4-point DFT computation unit

**Claims**

1.  A fast Fourier transform circuit comprising:

    a computation unit for executing fast Fourier computations with a plurality of Discrete Fourier Transformations as components;
    memories for storing input/output data of the computation unit; and
    control means for controlling writing a computation result produced by the computation unit in the memories in such a way that sequential order of reading data from the memories becomes the same for each stage with respect to computations for a plurality of stages, which the computation unit executes for target data.

2.  The fast Fourier transform circuit according to claim 1:

    wherein the computation unit has the Discrete Fourier Transformations, with a radix "B", as components; where the "B" is an integer of 2 or greater; and
    with respect to computations at a stage of $P = \log_B N$ executed by the computation unit in relation to data, for which the number of data "N" is an exponent of the radix "B"; the control means writes data, to be objective for the calculations in a subsequent stage, in the memories in such a way that the data is arranged in sequential order of addresses, which enables reading out of the memories with the same address for each value obtained by dividing the number of data "N" by the radix "B" with respect to sequential order of the fast Fourier computations, i.e., $k = 0, 1, - - -, N/B-1$.

3.  The fast Fourier transform circuit according to claim 2:

    wherein the control means specifies a write address WA (S, k, m); under the condition of $m = 0, 1, - - -, B-1$; for writing data in the memories, at each S-th stage; $S = 1, 2, - - - P$; with a sum value as a result of adding: a product as a result of multiplying a quotient by "m", the quotient being obtained by dividing the number of data "N" by a value of the radix "B" to the power of "P-S+1"; wherein "P-S" represents the number of stages remaining; a product as a result of multiplying a quotient by a value of the radix "B" to the power of "S", the quotient being obtained by dividing the sequential order number "k" by a value of the radix "B" to the power of "S-1"; and a remainder after dividing the sequential order number "k" by a value of the radix "B" to the power of "S-1"; and furthermore, the control means specifies a read address RA (S, k, m) for reading data from the memories, at each S-th stage; $S = 1, 2, - - - P$; with a sum value as a result of adding: a product as a result of multiplying a quotient by "m", the quotient being obtained by dividing the number of data "N" by the radix "B" and the sequential order number "k."

4.  The fast Fourier transform circuit according to claim 1:

    wherein the computation unit has a configuration for executing at least one of Discrete Fourier Transformations with multiple "B" points and "B/2" points; that are equal to or greater than 4; through 1 cycle;
    for data, in which the number of data "N" is a power of the "B/2" and not a power of "B", a computation of the computation unit is broken down into one stage for executing two Discrete Fourier Transformations with "B/2", and the $\log_B(N/2)$ stage for executing Discrete Fourier Transformations with "B"; and
    at each of the one stage and the $\log_B(N/2)$ stage, the control means writes data, to be objective for the calculations in a subsequent stage, in the memories in such a way that the data is arranged in sequential order of addresses, which enables reading out of the memories with the same address for each value obtained by dividing the number of data "N" by a value of "B" with respect to sequential order of the fast Fourier computations, i.e., $k = 0, 1, - - -, N/B-1$.

5.  The fast Fourier transform circuit according to claim 4:

wherein the control means specifies the write address WA (S, k, m); under the condition of m = 0, 1, - - -, B-1; for writing data in the memories at the one stage, with a value; the value being a result of adding twice "k" and "m" under the condition of m = 0, 1, - - -, B/2-1 and the value being a result of adding "N/2", twice "k", and "m-B/2" under the condition of m = B/2, - - -, B-1; and

the control means specifies the write address WA(S, k, m) for writing data in the memories at each of the $\log_B$(N/2) stage, with a sum value as a result of adding: a product as a result of multiplying a quotient by 'm', the quotient being obtained by dividing the number of data "N" by the value of "B" to the power of "P-S+1"; wherein "P-S" represents the number of stages remaining; a product as a result of multiplying a quotient by a half value of the value of "B" to the power of "S", the quotient being obtained by dividing twice the sequential order number "k" by the value of "B" to the power of "S-1"; and a remainder after dividing the sequential order number "k" by a half value of the value of "B" to the power of "S-1"; and

furthermore, the control means specifies the read address RA(S, k, m) for reading data from the memories at each of the one stage and the $\log_B$(N/2) stage with a sum value as a result of adding: a product as a result of multiplying a quotient by "m", the quotient being obtained by dividing the number of data "N" by the value of "B"; and the sequential order number "k."

6. The fast Fourier transform circuit according to any one of claim 1 through claim 5,
   further comprising: a read buffer for storing data read out of the memories, and outputting the data to the computation unit; and
   a write buffer for storing a computation result produced by the computation unit, and writing the computation result in the memories.

7. The fast Fourier transform circuit according to claim 6:

   wherein the plurality of Discrete Fourier Transformations as components of the computation unit are executed by means of data transfer of one cycle by the read buffer and the write buffer.

8. The fast Fourier transform circuit according to any one of claim 2 through claim 5,
   wherein the value of "B" is 4.

Fig.1

Stages

The number of stages:   $P=\log_4 N$
The number of stages at N=16:   $P=\log_4 16=2$

First Stage          Second Stage

4-point DFT

4-point DFT
4-point DFT
4-point DFT
4-point DFT
Group of DFT
Computations

4-point DFT

4-point DFT

4-point DFT
Group of DFT
Computations

Fig.2

x'(0) ○————╲          ╱————○ X'(0)
x'(1) ○————╲ ┌──────────┐ ╱————○ X'(1)
              │ 4-point DFT │
x'(2) ○————╱ └──────────┘ ╲————○ X'(2)
x'(3) ○————╱          ╲————○ X'(3)

# Fig.3

Physical Addresses
in Memories

| $B_0$ | $A_3$ | $A_2$ | $A_1$ | $A_0$ |
|---|---|---|---|---|
| $B_1$ | $A_7$ | $A_6$ | $A_5$ | $A_4$ |
| • | | | • | |
| • | | | • | |
| • | | | • | |
| $B_{(i/4)}$ | $A_{i+3}$ | $A_{i+2}$ | $A_{i+1}$ | $A_i$ |
| • | | | • | |
| • | | | • | |
| • | | | • | |
| $B_{(N/4-1)}$ | $A_{N-1}$ | $A_{N-2}$ | $A_{N-3}$ | $A_{N-4}$ |

# Fig.4

Fig.5

Fig.6

Memory 2A

| | | | |
|---|---|---|---|
| x(3) | x(2) | x(1) | x(0) |
| x(7) | x(6) | x(5) | x(4) |
| x(11) | x(10) | x(9) | x(8) |
| x(15) | x(14) | x(13) | x(12) |
| x(19) | x(18) | x(17) | x(16) |
| x(23) | x(22) | x(21) | x(20) |
| x(27) | x(26) | x(25) | x(24) |
| x(31) | x(30) | x(29) | x(28) |
| x(35) | x(34) | x(33) | x(32) |
| x(39) | x(38) | x(37) | x(36) |
| x(43) | x(42) | x(41) | x(40) |
| x(47) | x(46) | x(45) | x(44) |
| x(51) | x(50) | x(49) | x(48) |
| x(55) | x(54) | x(53) | x(52) |
| x(59) | x(58) | x(57) | x(56) |
| x(63) | x(62) | x(61) | x(60) |

Read Buffer 3

| | | | |
|---|---|---|---|
| x(3) | x(2) | x(1) | x(0) |
| x(19) | x(18) | x(17) | x(16) |
| x(35) | x(34) | x(33) | x(32) |
| x(51) | x(50) | x(49) | x(48) |
| | | | |
| | | | |
| | | | |
| | | | |

Fig.7

EP 2 538 345 A1

Memory 2A

| x(3) | x(2) | x(1) | x(0) |
|---|---|---|---|
| x(7) | x(6) | x(5) | x(4) |
| x(11) | x(10) | x(9) | x(8) |
| x(15) | x(14) | x(13) | x(12) |
| x(19) | x(18) | x(17) | x(16) |
| x(23) | x(22) | x(21) | x(20) |
| x(27) | x(26) | x(25) | x(24) |
| x(31) | x(30) | x(29) | x(28) |
| x(35) | x(34) | x(33) | x(32) |
| x(39) | x(38) | x(37) | x(36) |
| x(43) | x(42) | x(41) | x(40) |
| x(47) | x(46) | x(45) | x(44) |
| x(51) | x(50) | x(49) | x(48) |
| x(55) | x(54) | x(53) | x(52) |
| x(59) | x(58) | x(57) | x(56) |
| x(63) | x(62) | x(61) | x(60) |

Read Buffer 3

| x(3) | x(2) | x(1) | x(0) |
|---|---|---|---|
| x(19) | x(18) | x(17) | x(16) |
| x(35) | x(34) | x(33) | x(32) |
| x(51) | x(50) | x(49) | x(48) |
| x(7) | x(6) | x(5) | x(4) |
| | | | |
| | | | |
| | | | |

x(0)
x(16)
x(32)
x(48)

4-point DFT
Computation Unit 1

| x'(0) | X'(0) |
|---|---|
| x'(1) | X'(1) |
| x'(2) | X'(2) |
| x'(3) | X'(3) |

Write Buffer 4

| z(1,3) | z(1,2) | z(1,1) | z(1,0) |
|---|---|---|---|
| | | | |
| | | | |
| | | | |
| | | | |
| | | | |
| | | | |
| | | | |

Fig.8

Fig.9

Fig.10

Fig.11

Memory 2A

| x(3) | x(2) | x(1) | x(0) |
|---|---|---|---|
| x(7) | x(6) | x(5) | x(4) |
| x(11) | x(10) | x(9) | x(8) |
| x(15) | x(14) | x(13) | x(12) |
| x(19) | x(18) | x(17) | x(16) |
| x(23) | x(22) | x(21) | x(20) |
| x(27) | x(26) | x(25) | x(24) |
| x(31) | x(30) | x(29) | x(28) |
| x(35) | x(34) | x(33) | x(32) |
| x(39) | x(38) | x(37) | x(36) |
| x(43) | x(42) | x(41) | x(40) |
| x(47) | x(46) | x(45) | x(44) |
| x(51) | x(50) | x(49) | x(48) |
| x(55) | x(54) | x(53) | x(52) |
| x(59) | x(58) | x(57) | x(56) |
| x(63) | x(62) | x(61) | x(60) |

Read Buffer 3

| x(11) | x(10) | x(9) | x(8) |
|---|---|---|---|
| x(19) | x(18) | x(17) | x(16) |
| x(35) | x(34) | x(33) | x(32) |
| x(51) | x(50) | x(49) | x(48) |
| x(7) | x(6) | x(5) | x(4) |
| x(23) | x(22) | x(21) | x(20) |
| x(39) | x(38) | x(37) | x(36) |
| x(55) | x(54) | x(53) | x(52) |

4-point DFT Computation Unit 1

| $x'(0)$ | $X'(0)$ |
|---|---|
| $x'(1)$ | $X'(1)$ |
| $x'(2)$ | $X'(2)$ |
| $x'(3)$ | $X'(3)$ |

Write Buffer 4

| z(1,3) | z(1,2) | z(1,1) | z(1,0) |
|---|---|---|---|
| z(1,7) | z(1,6) | z(1,5) | z(1,4) |
| z(1,11) | z(1,10) | z(1,9) | z(1,8) |
| z(1,15) | z(1,14) | z(1,13) | z(1,12) |
| z(1,19) | z(1,18) | z(1,17) | z(1,16) |

Memory 2B

| z(1,3) | z(1,2) | z(1,1) | z(1,0) |
|---|---|---|---|

Fig.12

EP 2 538 345 A1

Fig.13

EP 2 538 345 A1

Memory 2A

| | | | |
|---|---|---|---|
| x(3) | x(2) | x(1) | x(0) |
| x(7) | x(6) | x(5) | x(4) |
| x(11) | x(10) | x(9) | x(8) |
| x(15) | x(14) | x(13) | x(12) |
| x(19) | x(18) | x(17) | x(16) |
| x(23) | x(22) | x(21) | x(20) |
| x(27) | x(26) | x(25) | x(24) |
| x(31) | x(30) | x(29) | x(28) |
| x(35) | x(34) | x(33) | x(32) |
| x(39) | x(38) | x(37) | x(36) |
| x(43) | x(42) | x(41) | x(40) |
| x(47) | x(46) | x(45) | x(44) |
| x(51) | x(50) | x(49) | x(48) |
| x(55) | x(54) | x(53) | x(52) |
| x(59) | x(58) | x(57) | x(56) |
| x(63) | x(62) | x(61) | x(60) |

Read Buffer 3

| | | | |
|---|---|---|---|
| x(11) | x(10) | x(9) | x(8) |
| x(27) | x(26) | x(25) | x(24) |
| x(43) | x(42) | x(41) | x(40) |
| x(51) | x(50) | x(49) | x(48) |
| x(7) | x(6) | x(5) | x(4) |
| x(23) | x(22) | x(21) | x(20) |
| x(39) | x(38) | x(37) | x(36) |
| x(107) | x(106) | x(105) | x(52) |

4-point DFT
Computation Unit 1

| | |
|---|---|
| x'(0) | X'(0) |
| x'(1) | X'(1) |
| x'(2) | X'(2) |
| x'(3) | X'(3) |

x(6)
x(22)
x(38)
x(106)

Write Buffer 4

| | | | |
|---|---|---|---|
| z(1,3) | z(1,2) | z(1,1) | z(1,0) |
| z(1,7) | z(1,6) | z(1,4) | z(1,4) |
| z(1,11) | z(1,10) | z(1,9) | z(1,8) |
| z(1,15) | z(1,14) | z(1,13) | z(1,12) |
| z(1,19) | z(1,18) | z(1,17) | z(1,16) |
| z(1,23) | z(1,22) | z(1,21) | z(1,20) |
| z(1,27) | z(1,26) | z(1,25) | z(1,24) |
| | | | |

Memory 2B

| | | | |
|---|---|---|---|
| z(1,3) | z(1,2) | z(1,1) | z(1,0) |
| z(1,7) | z(1,6) | z(1,5) | z(1,4) |
| z(1,11) | z(1,10) | z(1,9) | z(1,8) |
| | | | |
| | | | |
| | | | |
| | | | |
| | | | |
| | | | |
| | | | |
| | | | |
| | | | |
| | | | |
| | | | |
| | | | |
| | | | |

Fig.14

Fig.15

**Memory 2A**

| z(1,3) | z(1,2) | z(1,1) | z(1,0) |
|---|---|---|---|
| z(1,7) | z(1,6) | z(1,5) | z(1,4) |
| z(1,11) | z(1,10) | z(1,9) | z(1,8) |
| z(1,15) | z(1,14) | z(1,13) | z(1,12) |
| z(1,19) | z(1,18) | z(1,17) | z(1,16) |
| z(1,23) | z(1,22) | z(1,21) | z(1,20) |
| z(1,27) | z(1,26) | z(1,25) | z(1,24) |
| z(1,31) | z(1,30) | z(1,29) | z(1,28) |
| z(1,35) | z(1,34) | z(1,33) | z(1,32) |
| z(1,39) | z(1,38) | z(1,37) | z(1,36) |
| z(1,43) | z(1,42) | z(1,41) | z(1,40) |
| z(1,47) | z(1,46) | z(1,45) | z(1,44) |
| z(1,51) | z(1,50) | z(1,49) | z(1,48) |
| z(1,55) | z(1,54) | z(1,53) | z(1,52) |
| z(1,59) | z(1,58) | z(1,57) | z(1,56) |
| z(1,63) | z(1,62) | z(1,61) | z(1,60) |

**Write Buffer 4**

| z(1,35) | z(1,34) | z(1,33) | z(1,32) |
|---|---|---|---|
| z(1,39) | z(1,38) | z(1,37) | z(1,36) |
| z(1,43) | z(1,42) | z(1,41) | z(1,40) |
| z(1,47) | z(1,46) | z(1,45) | z(1,44) |
| z(1,51) | z(1,50) | z(1,49) | z(1,48) |
| z(1,55) | z(1,54) | z(1,53) | z(1,52) |
| z(1,59) | z(1,58) | z(1,57) | z(1,56) |
| z(1,63) | z(1,62) | z(1,61) | z(1,60) |

Fig.16

Fig.17

Fig.18

Fig.19

First Stage       Second Stage                    P-th Stage

2-point
DFT
2-point
DFT

4-point
DFT

4-point
DFT

Fig.20

x'(0) ○
x'(1) ○——[ 2-point DFT ]——○ x'(0)
x'(2) ○——[ 2-point DFT ]——○ x'(1)
x'(3) ○                        ○ x'(2)
                               ○ x'(3)

Fig.21

Fig.22

Fig.23

Fig.24

Fig.25

Write Buffer 4

| | | | |
|---|---|---|---|
| z(1,5) | z(1,4) | z(1,1) | z(1,0) |
| z(1,13) | z(1,12) | z(1,9) | z(1,8) |
| z(1,7) | z(1,6) | z(1,3) | z(1,2) |
| z(1,15) | z(1,14) | z(1,11) | z(1,10) |
| z(1,21) | z(1,20) | z(1,17) | z(1,16) |
| z(1,29) | z(1,28) | z(1,25) | z(1,24) |
| z(1,23) | z(1,22) | z(1,19) | z(1,18) |
| z(1,31) | z(1,30) | z(1,27) | z(1,26) |

Memory 2B

| | | | | |
|---|---|---|---|---|
| z(1,5) | z(1,4) | z(1,1) | z(1,0) | 1address intervals |
| z(1,13) | z(1,12) | z(1,9) | z(1,8) | |
| z(1,7) | z(1,6) | z(1,3) | z(1,2) | |
| z(1,15) | z(1,14) | z(1,11) | z(1,10) | |
| z(1,21) | z(1,20) | z(1,17) | z(1,16) | |
| z(1,29) | z(1,28) | z(1,25) | z(1,24) | |
| z(1,23) | z(1,22) | z(1,19) | z(1,18) | |
| z(1,31) | z(1,30) | z(1,27) | z(1,26) | |

Fig.26

EP 2 538 345 A1

**Memory 2B**

| z(1,5) | z(1,4) | z(1,1) | z(1,0) |
| z(1,13) | z(1,12) | z(1,9) | z(1,8) |
| z(1,7) | z(1,6) | z(1,3) | z(1,2) |
| z(1,15) | z(1,14) | z(1,11) | z(1,10) |
| z(1,21) | z(1,20) | z(1,17) | z(1,16) |
| z(1,29) | z(1,28) | z(1,25) | z(1,24) |
| z(1,23) | z(1,22) | z(1,19) | z(1,18) |
| z(1,31) | z(1,30) | z(1,27) | z(1,26) |

**Read Buffer 3**

| z(1,5) | z(1,4) | z(1,1) | z(1,0) |
| z(1,13) | z(1,12) | z(1,9) | z(1,8) |
| z(1,7) | z(1,6) | z(1,3) | z(1,2) |
| z(1,15) | z(1,14) | z(1,11) | z(1,10) |
| z(1,21) | z(1,20) | z(1,17) | z(1,16) |

**2-point/4-point DFT Computation Unit 11**

x'(0)   X'(0)
x'(1)   X'(1)
4-point DFT
x'(2)   X'(2)
x'(3)   X'(3)

**Write Buffer 4**

| | z(2,1) | | z(2,0) |
| | z(2,3) | | z(2,2) |

Fig.27

Fig.28

EP 2 538 345 A1

Memory 2B

| z(1,5) | z(1,4) | z(1,1) | z(1,0) |
|--------|--------|--------|--------|
| z(1,13) | z(1,12) | z(1,9) | z(1,8) |
| z(1,7) | z(1,6) | z(1,3) | z(1,2) |
| z(1,15) | z(1,14) | z(1,11) | z(1,10) |
| z(1,21) | z(1,20) | z(1,17) | z(1,16) |
| z(1,29) | z(1,28) | z(1,25) | z(1,24) |
| z(1,23) | z(1,22) | z(1,19) | z(1,18) |
| z(1,31) | z(1,30) | z(1,27) | z(1,26) |

Read Buffer 3

| z(1,5) | z(1,4) | z(1,1) | z(1,0) |
|--------|--------|--------|--------|
| z(1,13) | z(1,12) | z(1,9) | z(1,8) |
| z(1,7) | z(1,6) | z(1,3) | z(1,2) |
| z(1,15) | z(1,14) | z(1,11) | z(1,10) |
| z(1,21) | z(1,20) | z(1,17) | z(1,16) |
| z(1,29) | z(1,28) | z(1,25) | z(1,24) |
| z(1,23) | z(1,22) | z(1,19) | z(1,18) |
| | | | |

2-point/4-point DFT
Computation Unit 11

x'(0)                X'(0)
x'(1)   4-point DFT  X'(1)
x'(2)                X'(2)
x'(3)                X'(3)

Write Buffer 4

| z(2,5) | z(2,1) | z(2,4) | z(2,0) |
|--------|--------|--------|--------|
| z(2,7) | z(2,3) | z(2,6) | z(2,2) |
| | z(2,9) | | z(2,8) |
| | z(2,11) | | z(2,10) |
| | | | |
| | | | |
| | | | |
| | | | |

Fig.29

EP 2 538 345 A1

**Memory 2B**

| z(1,5) | z(1,4) | z(1,1) | z(1,0) |
|---|---|---|---|
| z(1,13) | z(1,12) | z(1,9) | z(1,8) |
| z(1,7) | z(1,6) | z(1,3) | z(1,2) |
| z(1,15) | z(1,14) | z(1,11) | z(1,10) |
| z(1,21) | z(1,20) | z(1,17) | z(1,16) |
| z(1,29) | z(1,28) | z(1,25) | z(1,24) |
| z(1,23) | z(1,22) | z(1,19) | z(1,18) |
| z(1,31) | z(1,30) | z(1,27) | z(1,26) |

**Read Buffer 3**

| z(1,5) | z(1,4) | z(1,1) | z(1,0) |
|---|---|---|---|
| z(1,13) | z(1,12) | z(1,9) | z(1,8) |
| z(1,7) | z(1,6) | z(1,3) | z(1,2) |
| z(1,15) | z(1,14) | z(1,11) | z(1,10) |
| z(1,21) | z(1,20) | z(1,17) | z(1,16) |
| z(1,29) | z(1,28) | z(1,25) | z(1,24) |
| z(1,23) | z(1,22) | z(1,19) | z(1,18) |
| z(1,31) | z(1,30) | z(1,27) | z(1,26) |

**2-point/4-point DFT Computation Unit 11**

$x'(0)$   $X'(0)$
$x'(1)$   $X'(1)$   4-point DFT
$x'(2)$   $X'(2)$
$x'(3)$   $X'(3)$

**Write Buffer 4**

| z(2,5) | z(2,1) | z(2,4) | z(2,0) |
|---|---|---|---|
| z(2,7) | z(2,3) | z(2,6) | z(2,2) |
| z(2,13) | z(2,9) | z(2,12) | z(2,8) |
| z(2,15) | z(2,11) | z(2,14) | z(2,10) |
|  |  |  |  |
|  |  |  |  |
|  |  |  |  |
|  |  |  |  |

Fig.30

2 address intervals

Write Buffer 4

| z(2,5) | z(2,1) | z(2,4) | z(2,0) |
| z(2,7) | z(2,3) | z(2,6) | z(2,2) |
| z(2,13) | z(2,9) | z(2,12) | z(2,8) |
| z(2,15) | z(2,11) | z(2,14) | z(2,10) |
| z(2,21) | z(2,17) | z(2,20) | z(2,16) |
| z(2,23) | z(2,19) | z(2,22) | z(2,18) |
| z(2,29) | z(2,25) | z(2,28) | z(2,24) |
| z(2,31) | z(2,27) | z(2,30) | z(2,26) |

Memory 2A

| z(2,5) | z(2,1) | z(2,4) | z(2,0) |
| z(2,7) | z(2,3) | z(2,6) | z(2,2) |
| z(2,13) | z(2,9) | z(2,12) | z(2,8) |
| z(2,15) | z(2,11) | z(2,14) | z(2,10) |
| z(2,21) | z(2,17) | z(2,20) | z(2,16) |
| z(2,23) | z(2,19) | z(2,22) | z(2,18) |
| z(2,29) | z(2,25) | z(2,28) | z(2,24) |
| z(2,31) | z(2,27) | z(2,30) | z(2,26) |
| | | | |
| | | | |
| | | | |
| | | | |
| | | | |
| | | | |
| | | | |
| | | | |

Fig.31

Fig.32

Fig.33

**INTERNATIONAL SEARCH REPORT**

| International application No. |
| --- |
| PCT/JP2011/052844 |

A. CLASSIFICATION OF SUBJECT MATTER
*G06F17/14*(2006.01)i

According to International Patent Classification (IPC) or to both national classification and IPC

B. FIELDS SEARCHED

Minimum documentation searched (classification system followed by classification symbols)
G06F17/10-17/18

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2008-217359 A (Fujitsu Ltd.),<br>18 September 2008 (18.09.2008),<br>paragraphs [0019] to [0025]; fig. 1, 2<br>(Family: none) | 1<br>2,4,6-8<br>3,5 |
| Y<br>A | JP 2004-166083 A (Matsushita Electric<br>Industrial Co., Ltd.),<br>10 June 2004 (10.06.2004),<br>paragraphs [0075] to [0084]; fig. 11 to 13<br>& US 2004/0105497 A1 & CN 1501716 A | 2,4,8<br>3,5 |
| Y<br>A | JP 2009-95008 A (Mitsubishi Electric Corp.),<br>30 April 2009 (30.04.2009),<br>paragraphs [0085] to [0101]; fig. 12 to 14<br>(Family: none) | 2,4,8<br>3,5 |

| ☒ | Further documents are listed in the continuation of Box C. | ☐ | See patent family annex. |
| --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 April, 2011 (21.04.11) | 10 May, 2011 (10.05.11) |

| Name and mailing address of the ISA/<br>Japanese Patent Office | Authorized officer |
| --- | --- |
| Facsimile No. | Telephone No. |

Form PCT/ISA/210 (second sheet) (July 2009)

INTERNATIONAL SEARCH REPORT

| International application No. |
|---|
| PCT/JP2011/052844 |

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2008-186396 A (Mitsubishi Electric Corp.),<br>14 August 2008 (14.08.2008),<br>paragraphs [0062] to [0065]; fig. 11<br>(Family: none) | 4<br>5 |
| Y<br>A | JP 11-110370 A (Matsushita Electric Industrial<br>Co., Ltd.),<br>23 April 1999 (23.04.1999),<br>paragraphs [0070] to [0071]; fig. 4<br>& US 6115728 A          & US 6247034 B1<br>& EP 855657 A2          & DE 69837299 D<br>& CN 1188939 A          & CA 2227677 A1 | 4<br>5 |
| Y<br>A | JP 2008-533873 A (Qualcomm Inc.),<br>21 August 2008 (21.08.2008),<br>paragraph [0165]<br>& US 2006/0248135 A1     & EP 1856626 A<br>& WO 2006/099526 A2     & CN 101300572 A<br>& KR 10-0923892 B       & KR 10-2007-0112244 A | 4<br>5 |
| Y | JP 62-273440 A (Hitachi, Ltd., Hitachi<br>Instruments Engineering Co., Ltd.),<br>27 November 1987 (27.11.1987),<br>page 1, lower left column, line 20 to page 2,<br>upper left column, line 3<br>(Family: none) | 6,7 |
| A | JP 63-292267 A (Nippon Telegraph And Telephone<br>Corp.),<br>29 November 1988 (29.11.1988),<br>entire text; all drawings<br>(Family: none) | 1-8 |

Form PCT/ISA/210 (continuation of second sheet) (July 2009)

**INTERNATIONAL SEARCH REPORT**

International application No.

PCT/JP2011/052844

---

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III      Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

**INTERNATIONAL SEARCH REPORT**

International application No.

PCT/JP2011/052844

Continuation of Box No.III of continuation of first sheet(2)

Document 1: JP 2008-217359 A (Fujitsu Ltd.), 18 September 2008 (18.09.2008), paragraphs [0019] to [0025]; fig. 1, 2 (Family: none)

Document 1 discloses "A fast Fourier Transform device which is provided with first and second Radix-2 butterfly operation parts, and operation memory, and which writes the operation result of a butterfly operation in each stage to the same address of the operation memory from which the operation data is read."
Consequently, the invention of claim 1 is not novel in relation to the invention disclosed in document 1, and thus does not have a special technical feature. Hence, as a result of judging the special technical feature of the dependent claims of claim 1, two inventions linked in the following special technical features are involved.
Note that the invention of claim 1 not having a special technical feature is classified into Invention 1.

(Invention 1) the inventions of claims 1-3, 6-8
A fast Fourier Transform circuit which performs writing to memory in the address order in which the operation in a $P=\log_B N$ stage can be read out at the same address for each of the values obtained by dividing a data number (N) by a base (B).

(Invention 2) the inventions of claims 4, 5
The fast Fourier Transform circuit which executes the Digital Fourier Transform of one of four or a plurality of B points, or B/2 points in one cycle.

Form PCT/ISA/210 (extra sheet) (July 2009)

**REFERENCES CITED IN THE DESCRIPTION**

**Patent documents cited in the description**

- JP 2006155487 A
- JP 2007148623 A
- JP 2004516551 A